# EUROPEAN PATENT APPLICATION

(11) **EP 1 909 477 A2**
(43) Date of publication of application: **09.04.2008**
(21) Application number: 07019049.1
(22) Date of filing: 27.09.2007
(51) Int. Cl.: H04N 1/00

(54) **Scrapbook server, method of controlling same, and control program therefor**

(30) Priority: 29.09.2006 JP 2006266572; 29.09.2006 JP 2006266573; 12.07.2007 JP 2007182713
(71) Applicant: FUJIFILM Corporation, Minato-ku Tokyo 106-8620 (JP)
(72) Inventor: Minatogawa, Hiroshi, Tokyo 106-8620 (JP); Gothoda, Yukita, Ashigarakami-gun Kanagawa 258-8538 (JP); Itoh, Meiji, Ashigarakami-gun Kanagawa 258-8538 (JP); Tomono, Masafumi, Ashigarakami-gun Kanagawa 258-8538 (JP); Kon, Karin, Tokyo 140-0002 (JP); Suzuki, Yuko, Tokyo 140-0002 (JP)
(74) Representative: Höhfeld, Jochen

(57) **Abstract**

A user accesses a scrapbook server using a computer and executes a simulation for creating a scrapbook by affixing part images such as photographic images and decorative images to an image of a paper mount utilizing a scrapbook image, which has been created by another person, on the display screen of the computer. A procedural manual in line with the simulation is created. The procedural manual and paper mount, photographs and decorations such as buttons and ribbons for actually creating the scrapbook are bundled into a package and the package is delivered to the user. The user accepts the package and, while viewing the manual and using the bundled paper mount and decorations, actually creates the scrapbook in the manner that was simulated. The creator is given points that differ depending upon how the scrapbook image was utilized.

## Description

### BACKGROUND OF THE INVENTION

### Field of the Invention

This invention relates to a scrapbook server, a method of controlling the server and a program for controlling the server.

### Description of the Related Art

There is a technique whereby a server is accessed to furnish a postcard with an image or decoration (see the specification of Japanese Patent Application Laid-Open No. 11-53521). With a technique of this kind, a template image is displayed on the computer of the user and the user performs an editing operation to decorate or embellish the template image. A desired number of copies of the edited postcard are printed and delivered to the residence of the user.

A postcard thus edited and completed is merely delivered to the residence of the user. This is different from an operation in which the user creates a postcard by actually affixing parts such as photographs, ribbons and buttons to a paper mount.

### SUMMARY OF THE INVENTION

Accordingly, an object of the present invention is to so arrange it that when a user creates a work referred to as a scrapbook by actually utilizing parts such as photographs, ribbons and buttons, the user can utilize editing performed by another person, and to decide the usage fee when editing performed by another person has been utilized.

According to a first aspect of the present invention, the foregoing object is attained by providing a scrapbook server comprising: a scrapbook image data transmitting device for transmitting scrapbook image data representing scrapbook images to a client computer in order to display scrapbook images, which are images of a scrapbook that has been created by affixing a part such as a photograph to a part such as a paper mount, on a display screen of a display unit of the client computer; a select-command receiving device for receiving a select command transmitted from the client computer in response to selection of desired scrapbook images from among the scrapbook images displayed on the display screen of the display unit of the client computer owing to transmission of the scrapbook image data from the scrapbook image data transmitting device to the client computer; a for-edit scrapbook image data transmitting device, which is responsive to receipt of the select command by the select-command receiving device, for transmitting for-edit scrapbook image data representing a for-edit scrapbook image to the client computer in order to display a for-edit scrapbook image on the display screen of the display unit of the client computer, the for-edit scrapbook image excluding photographic images used in scrapbook images among the selected scrapbook images (the photographic image is an image obtained by sensing the image of a subject using a digital still camera or the like, or an image obtained by image sensing performed by the user of the client computer, and is different from a decorative image in that a decorative image is created using a personal computer or the like); an order data receiving device for receiving order data that includes data identifying a part necessary for scrapbook creation, the order data being transmitted from the client computer owing to execution by the client computer of a scrapbook creating simulation, such as placement of a photographic image, placement of a part image and selection of a part used in a scrapbook, utilizing the for-edit scrapbook image displayed on the display screen of the display unit of the client computer owing to transmission of the for-edit scrapbook image data from the for-edit scrapbook image data transmitting device to the client computer; and a printer control device for controlling a printer, based upon the order data received by the order data receiving device, so as to print a procedural manual in which a procedure for creating the scrapbook is described.

The first aspect of the present invention also provides a control method suited to the scrapbook server described above. Specifically, the first aspect of the present invention provides a method of controlling a scrapbook server comprising the steps of: transmitting, by a scrapbook image data transmitting device, scrapbook image data representing scrapbook images to a client computer in order to display scrapbook images, which are images of a scrapbook that has been created by affixing a part such as a photograph to a part such as a paper mount, on a display screen of a display unit of the client computer; receiving, by a select-command receiving device, a select command transmitted from the client computer in response to selection of desired scrapbook images from among the scrapbook images displayed on the display screen of the display unit of the client computer owing to transmission of the scrapbook image data from the scrapbook image data transmitting device to the client computer; in response to receipt of the select command by the select-command receiving device, transmitting, by a for-edit scrapbook image data transmitting device, for-edit scrapbook image data representing a for-edit scrapbook image to the client computer in order to display a for-edit scrapbook image on the display screen of the display unit of the client computer, the for-edit scrapbook image excluding photographic images used in scrapbook images among the selected scrapbook images; receiving, by an order data receiving device, order data that includes data identifying a part necessary for scrapbook creation, the order data being transmitted from the client computer owing to execution by the client computer of scrapbook creating simulation, such as placement of a photographic image, placement of a part image and selection of a part used in a scrapbook, utilizing the for-edit scrapbook image displayed on the display screen of the display unit of the client computer owing to transmission of the for-edit scrapbook image data from the for-edit scrapbook image data transmitting device to the client computer; and controlling a printer by a printer control device, based upon the order data received by the order data receiving device, so as to print a procedural manual in which a procedure for creating the scrapbook is described.

The first aspect of the present invention further provides a program for implementing the method of controlling the scrapbook server described above, and a recording medium on which this program has been stored.

In accordance with the first aspect of the present invention, scrapbook image data is transmitted from a scrapbook server to a client computer. The scrapbook image data represents a scrapbook image (obtained for example by taking a picture of a scrapbook), which is an image of a scrapbook that has been created by affixing a part such as a photograph to a part such as a paper mount. The scrapbook image is displayed on the display screen of the client computer. When the displayed scrapbook image is selected, a select command is transmitted from the client computer to the scrapbook server. When the select command is received at the scrapbook server, for-edit scrapbook data representing a scrapbook image for editing is transmitted from the scrapbook server to the client computer. The for-edit scrapbook image excludes a photographic image used in the selected scrapbook image. This for-edit scrapbook image from which a photographic image is excluded is displayed on the display screen of the display unit of the client computer. The user of the client computer is capable of performing a simulation for creating an actual scrapbook, such as selection of a part image, such as a photographic image, a decorative image such as a heart image or diamond image and an image of material such as a ribbon or button, or a decision regarding the placement thereof, using a for-edit scrapbook image created by another person (the creator of the scrapbook). When the simulation is performed, order data is transmitted from the client computer to the scrapbook server, whereupon a procedural manual that makes it possible to create a scrapbook in line with the simulation is printed at the scrapbook server.

The procedural manual and the parts (photographs, decorative images, buttons, ribbons, etc.) corresponding to the part images utilized in the simulation are packaged and delivered to the residence of the user. The user accepts the package at home and can create the scrapbook in accordance with the procedural manual using the parts bundled in the package. The user can perform a simulation utilizing an edited image of a scrapbook of another person and can receive a user-specific procedural manual that is in accordance with the simulation. A scrapbook can be created in line with the content of the simulation.

The printer control device prints a procedural manual in conformity with a case where only viewing of a for-edit scrapbook image is permitted and the image is to be viewed; a case where a simulation is performed in which a photographic image is excluded from a for-edit scrapbook image and another photographic image is disposed in place of the excluded photographic image; a case where a simulation is performed in which a part image contained in a for-edit scrapbook image is changed or the position at which a part image is placed is changed; a case where a part image created by the creator of the for-edit scrapbook image is extracted from among part images contained in the for-edit scrapbook image and a simulation for creating a scrapbook is performed anew using the extracted part image; and, if a part image created by the creator of the for-edit scrapbook image is extracted from among part images contained in the for-edit scrapbook image and a simulation for creating a scrapbook is performed anew using the extracted part image, a case where order data for scrapbook creation is transmitted from the client computer utilizing the for-edit scrapbook image when secondary utilization of the extracted for-edit image has been permitted and when it has not been permitted.

According to a second aspect of the present invention, the foregoing object is attained by providing a scrapbook server comprising: a for-edit scrapbook image data extracting device for extracting a plurality of items of for-edit scrapbook image data, which represent a plurality of for-edit scrapbook images having a high rate of utilization, from among a number of items of scrapbook image data representing a number of for-edit scrapbook images excluding a photographic image used in a scrapbook image, which is an image of a scrapbook created by affixing a part such as a photograph to a part such as a paper mount; a for-edit scrapbook image data transmitting device for transmitting the plurality of items of for-edit scrapbook image data extracted by the for-edit scrapbook image data extracting device to a client computer of a user of the user of the for-edit scrapbook images in order to display the plurality of for-edit scrapbook images on a display screen of a display unit of the client computer of the user; a first identification data receiving device for receiving identification data transmitted from the client computer of the user owing to transmission of the plurality of items of for-edit scrapbook image data from the for-edit scrapbook image data transmitting device to the client computer of the user, the identification data specifying a for-edit scrapbook image selected from among the plurality of for-edit scrapbook images displayed on the display screen of the display unit of the client computer of the user; and a printer control device for controlling a printer so as to print a procedural manual in which is described a procedure for creating a scrapbook corresponding to a for-edit scrapbook image specified by the identification data received by the first identification data receiving device.

The second aspect of the present invention also provides a control method suited to the scrapbook server described above. Specifically, the second aspect of the present invention provides a method of controlling a scrapbook server comprising the steps of: extracting, by a for-edit scrapbook image data extracting device, a plurality of items of for-edit scrapbook image data, which represent a plurality of for-edit scrapbook images having a high rate of utilization, from among a number of items of scrapbook image data representing a number of for-edit scrapbook images excluding a photographic image used in a scrapbook image, which is an image of a scrapbook created by affixing a part such as a photograph to a part such as a paper mount; transmitting, by a for-edit scrapbook image data transmitting device, the plurality of items of for-edit scrapbook image data extracted by the for-edit scrapbook image data extracting device to a client computer of a user of the for-edit scrapbook images in order to display the plurality of for-edit scrapbook images on a display screen of a display unit of the client computer of the user; receiving, by a first identification data receiving device, identification data transmitted from the client computer of the user owing to transmission of the plurality of items of for-edit scrapbook image data from the for-edit scrapbook image data transmitting device to the client computer of the user, the identification data specifying a for-edit scrapbook image selected from among the plurality of for-edit scrapbook images displayed on the display screen of the display unit of the client computer of the user; and controlling, by a printer control device, a printer so as to print a procedural manual in which is described a procedure for creating a scrapbook corresponding to a for-edit scrapbook image specified by the identification data received by the first identification data receiving device.

The second aspect of the present invention further provides a program for implementing the method of controlling the scrapbook server described above, and a recording medium on which this program has been stored.

In accordance with the second aspect of the present invention, for-edit scrapbook image data representing a plurality of for-edit scrapbook images having a high rate of utilization is extracted from among a number of for-edit scrapbook images excluding a photographic image of a creator of a scrapbook image used in a scrapbook image. The extracted for-edit scrapbook image data is transmitted from the scrapbook server to the client computer of the user of the for-edit scrapbook image. When the extracted for-edit scrapbook image data is received at the user client computer, the plurality of for-edit scrapbook images having a high rate of utilization are displayed on the display screen of the display unit of the user client computer. A for-edit scrapbook image that the user wishes to utilize is selected from among the plurality of for-edit scrapbook images displayed. When this is done, identification data specifying the selected for-edit scrapbook image is transmitted from the user client computer to the scrapbook server. When the identification data transmitted from the user client computer is received at the scrapbook server, a procedure for creating a scrapbook corresponding to the received for-edit scrapbook image is described and a procedural manual printed.

In accordance with the second aspect of the present invention, a user, by utilizing a scrapbook image created by another person, is capable of obtaining a procedural manual for creating a scrapbook that is based upon this scrapbook image without the user himself performing a simulation for creating a scrapbook. Moreover, a popular scrapbook image having a high rate of utilization can be utilized. Of course, the user may utilize a scrapbook image that was created by the user himself and not a scrapbook image necessarily created by another person.

The scrapbook server according to the second aspect of the present invention may further comprise: a combining device for combining a photographic image of the user with each of the plurality of for-edit scrapbook images represented by the plurality of items of for-edit scrapbook image data extracted by the for-edit scrapbook image data extracting device; an edited scrapbook image data transmitting device for transmitting a plurality of items of scrapbook image data, which represent a plurality of edited scrapbook images obtained by combining the photographic image of the user with each of the for-edit scrapbook images by the combining device, to the client computer of the user in order to display a plurality of edited scrapbook images on the display screen of the display unit of the client computer of the user; and a second identification data receiving device for receiving identification data specifying an edited scrapbook image selected from the plurality of edited scrapbook images displayed on the display screen of the display unit of the client computer of the user owing to transmission of the plurality of items of scrapbook image data from the edited scrapbook image data transmitting device to the client computer of the user. In this case, the printer control device would control the printer so as to print a procedural manual in which is described a procedure for creating a scrapbook corresponding to the edited scrapbook image specified by the identification data received by the second identification data receiving device.

The scrapbook server according to the second aspect of the present invention may further comprise a photographic image detecting device for executing processing for finding a photographic image resembling a photographic image of the creator of a scrapbook image contained in a scrapbook image corresponding to each for-edit scrapbook image of the plurality of for-edit scrapbook images extracted by the for-edit scrapbook image data extracting device from photographic images of users stored in advance, this processing being executed for a plurality of for-edit scrapbook images. In this case, processing for combining a corresponding photographic image, from among a plurality of photographic images detected by the photographic image detecting device, with each for-edit scrapbook image scrapbook image of the plurality of scrapbook images represented by the plurality of items of for-edit scrapbook image data extracted by the for-edit scrapbook image data extracting device would be repeated for each of the plurality of for-edit scrapbook images. In order to find a photographic image resembling a photographic image of the creator of a scrapbook image, it would for example suffice to analyze the photographic images of creators and find a photographic image having a characteristic (tint, type of subject contained in the photographic image, number of subjects) close to a characteristic of the analyzed photographic image of the creator. Further, even without analyzing photographic images, if a characteristic of a photographic image has been appended as auxiliary information of the photographic image, a photographic image resembling the photographic image of the creator of a scrapbook can be found utilizing the auxiliary information. The auxiliary information would be recorded in the header of a photographic image file representing the photographic image, by way of example. Of course, by storing auxiliary information of a number of photographic images in an auxiliary information table beforehand, the auxiliary information can be read out of the auxiliary information table and a photographic image resembling the photographic image of the creator of a scrapbook can be found even without recording the auxiliary information in a header.

According to a third aspect of the present invention, the foregoing object is attained by providing a scrapbook server comprising: a scrapbook image data transmitting device for transmitting scrapbook image data representing a scrapbook image to a client computer in order to display a scrapbook image, which is obtained by sensing the image of a scrapbook that has been created by affixing a part such as a photograph to a part such as a paper mount, on a display screen of a display unit of the client computer; a select-command receiving device for receiving a select command transmitted from the client computer in response to selection of a scrapbook image displayed on the display screen of the display unit of the client computer owing to transmission of the scrapbook image data from the scrapbook image data transmitting device to the client computer; a for-edit scrapbook image data transmitting device, which is responsive to receipt of the select command by the select-command receiving device, for transmitting for-edit scrapbook image data representing a for-edit scrapbook image to the client computer in order to a display a for-edit scrapbook image on the display screen of the display unit of the client computer, the for-edit scrapbook image excluding a photographic image used in a scrapbook image in the selected scrapbook image (the photographic image is an image obtained by sensing the image of a subject using a digital still camera or the like, or an image obtained by image sensing performed by the user of the client computer, and is different from a decorative image in that a decorative image is created using a personal computer or the like); a utilization-mode-data receiving device for receiving data, which represents mode of utilization of the for-edit scrapbook image, transmitted from the client computer owing to execution by the client computer of a scrapbook creating simulation, such as placement of a photographic image and part image and selection of a part used in a scrapbook, utilizing the for-edit scrapbook image displayed on the display screen of the display unit of the client computer owing to transmission of the for-edit scrapbook image data from the for-edit scrapbook image data transmitting device to the client computer; and a usage fee deciding device for deciding a usage fee to the creator of the for-edit scrapbook image based upon the mode of utilization represented by the utilization-mode data received by the utilization-mode-data receiving device.

The third aspect of the present invention also provides a control method suited to the scrapbook server described above. Specifically, the third aspect of the present invention provides a method of controlling a scrapbook server comprising the steps of: transmitting, by a scrapbook image data transmitting device, scrapbook image data representing a scrapbook image to a client computer in order to display a scrapbook image, which is obtained by sensing the image of a scrapbook that has been created by affixing a part such as a photograph to a part such as a paper mount, on a display screen of a display unit of the client computer; receiving, by a select-command receiving device, a select command transmitted from the client computer in response to selection of a scrapbook image displayed on the display screen of the display unit of the client computer owing to transmission of the scrapbook image data from the scrapbook image data transmitting device to the client computer; transmitting, by a for-edit scrapbook image data transmitting device in response to receipt of the select command by the select-command receiving device, for-edit scrapbook image data representing a for-edit scrapbook image to the client computer in order to a display a for-edit scrapbook image on the display screen of the display unit of the client computer, the for-edit scrapbook image excluding a photographic image used in a scrapbook image in the selected scrapbook image; receiving, by a utilization-mode-data receiving device, data, which represents mode of utilization of the for-edit scrapbook image, transmitted from the client computer owing to execution by the client computer of a scrapbook creating simulation, such as placement of a photographic image and part image and selection of a part used in a scrapbook, utilizing the for-edit scrapbook image displayed on the display screen of the display unit of the client computer owing to transmission of the for-edit scrapbook image data from the for-edit scrapbook image data transmitting device to the client computer; and deciding, by a usage fee deciding device, a usage fee to the creator of the for-edit scrapbook image based upon the mode of utilization represented by the utilization-mode data received.

The third aspect of the present invention further provides a program for implementing the method of controlling the scrapbook server described above, and a recording medium on which this program has been stored.

In accordance with the third aspect of the present invention, scrapbook image data is transmitted from a scrapbook server to a client computer. The scrapbook image data represents a scrapbook image obtained by sensing the image of a scrapbook that has been created by affixing a part such as a photograph to a part such as a paper mount. The scrapbook image is displayed on the display screen of the client computer. When the displayed scrapbook image is selected, a select command is transmitted from the client computer to the scrapbook server. When the select command is received at the scrapbook server, for-edit scrapbook data representing a scrapbook image for editing is transmitted from the scrapbook server to the client computer. The for-edit scrapbook image excludes a photographic image used in the selected scrapbook image. This for-edit scrapbook image from which a photographic image is excluded is displayed on the display screen of the display unit of the client computer. The user of the client computer is capable of performing a simulation for creating an actual scrapbook, such as selection of a part image, such as a photographic image, a decorative image such as a heart image or diamond image and an image of material such as a ribbon or button, or a decision regarding the placement thereof, using a for-edit scrapbook image created by another person (the creator of the scrapbook). When the simulation is performed, data representing mode of utilization is transmitted from the client computer to the scrapbook server, whereupon a usage fee to the creator of the scrapbook image is decided by the scrapbook server in accordance with the mode of utilization of the for-edit scrapbook image. The usage fee can be made to differ depending upon the mode of utilization of the for-edit scrapbook image.

A procedural manual for creating the scrapbook is printed and the manual is packaged together with the parts (photographs, decorative images, buttons, ribbons, etc.) corresponding to the part images that were utilized in the simulation and the package is delivered to the residence of the user. The user accepts the package at home, and can create a scrapbook in accordance with the procedural manual using the parts bundled in the package.

The usage fee deciding device decides a usage fee to the creator of the scrapbook in such a manner that the usage fee will differ in a case where only viewing of a for-edit scrapbook image is permitted and the image is to be viewed; a case where a simulation is performed in which a photographic image is excluded from a for-edit scrapbook image and another photographic image is disposed in place of the excluded photographic image; a case where a simulation is performed in which a part image contained in a for-edit scrapbook image is changed or the position at which a part image is placed is changed; a case where a part image created by the creator of the for-edit scrapbook image is extracted from among part images contained in the for-edit scrapbook image and a simulation for creating a scrapbook is performed anew using the extracted part image; and, if a part image created by the creator of the for-edit scrapbook image is extracted from among part images contained in the for-edit scrapbook image and a simulation for creating a scrapbook is performed anew using the extracted part image, a case where order data for scrapbook creation is transmitted from the client computer utilizing the for-edit scrapbook image when secondary utilization of the extracted for-edit image has been permitted and when it has not been permitted.

A mode of utilization that has been permitted and a mode of utilization that has not been permitted are set from among a plurality of modes of utilization of a for-edit scrapbook image. The utilization-mode-data receiving device accepts utilization-mode data transmitted from the client computer based upon a simulation for creating a scrapbook in a utilization mode that has been permitted.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 illustrates an overview of a scrapbook order system;
Fig. 2 is a block diagram illustrating the electrical configuration of the scrapbook server;
Figs. 3 to 6 are flowcharts illustrating processing executed between the computer of a creator and a scrapbook server;
Figs. 7 to 12 illustrate examples of windows displayed on the display screen of a computer;
Fig. 13 illustrates an example of layer data;
Fig. 14 illustrates layer thickness information;
Figs. 15A to 15E illustrate the manner in which layers are superimposed;
Fig. 16 illustrates thickness information concerning superimposed layers;
Fig. 17 is a flowchart illustrating thickness determination processing;
Fig. 18 illustrates an example of a window displayed on the display screen of a computer;
Fig. 19 is a flowchart illustrating processing for creating scrapbook data;
Fig. 20A illustrates two layers and Fig. 20B illustrates superimposed layers;
Fig. 21 is a flowchart illustrating overlap determination processing;
Fig. 22 is an example of a layer;
Fig. 23 is an example of a procedural manual;
Figs. 24A to 24E illustrate an example of a pictorial procedural manual;
Fig. 25 is a flowchart illustrating processing for creating a pictorial procedural manual;
Fig. 26 is an example of a window displayed on the display screen of a computer;
Fig. 27 is a flowchart illustrating processing for setting an affiliate;
Fig. 28 is an example of a public page;
Figs. 29 and 30 are flowcharts illustrating processing between a user computer and a scrapbook server;
Fig. 31 illustrates an example of a blog;
Fig. 32 is a flowchart illustrating processing between a user computer and a scrapbook server;
Fig. 33 illustrates the corresponding relationship between set affiliate content and points;
Fig. 34 is a flowchart illustrating point processing;
Fig. 35 is a flowchart illustrating processing by a scrapbook server;
Fig. 36A illustrates a scrapbook image, Fig. 36B a user photograph image and Fig. 36C a scrapbook image for editing;
Fig. 37 illustrates an example of a table of user photo image information;
Figs. 38 and 39 are flowcharts illustrating part of processing executed by a user client computer and scrapbook server;
Fig. 40 illustrates processing for generating scrapbook images for which editing has been completed; and
Fig. 41 illustrates an example of a popularity ranking page.

### DESCRIPTION OF THE PREFERRED EMBODIMENTS

A preferred embodiment of the present invention will now be described in detail with reference to the accompanying drawings.

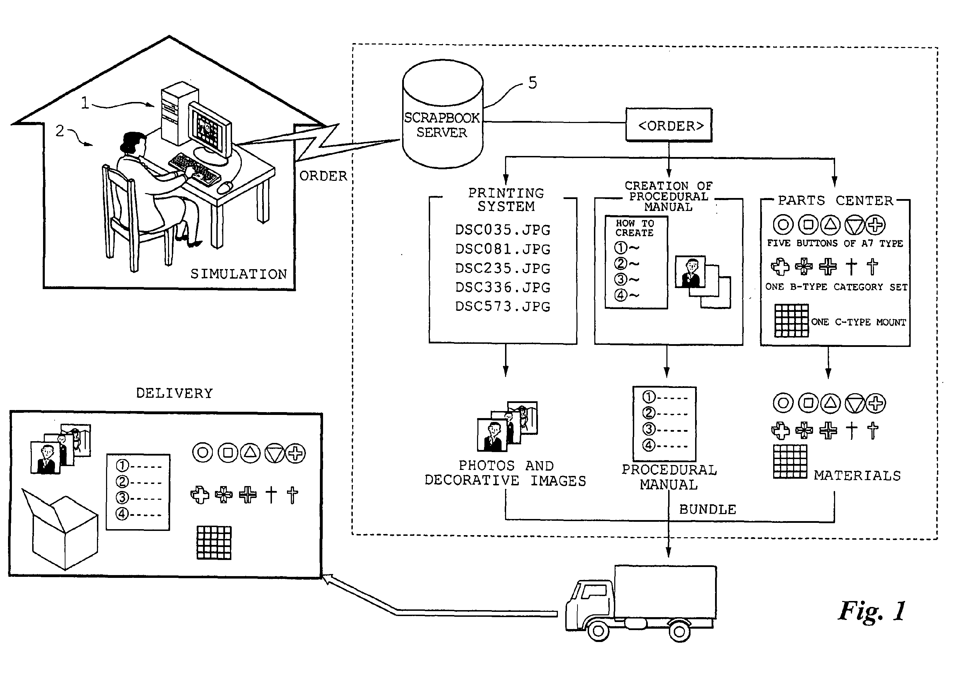

Fig. 1 illustrates an overview of a scrapbook order system according to a preferred embodiment of the present invention.

The scrapbook order system according to this embodiment is such that a creator 2 attempting to actually create a scrapbook is capable of executing a simulation for creating the scrapbook using the creator's own computer 1. The creator 2 accesses a scrapbook server 5 using the computer 1. When this is done, the scrapbook server 5 sends the computer 1 of the creator 2 part image data representing part images for executing the simulation of scrapbook creation. Examples of the part images are a paper mount image, photographic image, decorative images such as marks, and material images representing three-dimensional materials such as a ribbon or button.

Upon receiving the part image data, the computer 1 of the creator 2 executes the scrapbook creating simulation on the display screen on the computer 1 using the part images represented by the part image data. Whenever a part image is selected and the placement thereof decided, layer data is transmitted from the computer 1 of the creator 2 to the scrapbook server 5 in succession.

Upon receiving the layer data transmitted from the computer 1 of the creator 2, the scrapbook server 5 creates a procedural manual (an explanation manual for actually creating a scrapbook) in line with the simulation of the creator 2 based upon the received layer data. Further, photographs and decorative images necessary in order to create the scrapbook are printed, and material such as ribbons and buttons is extracted in a parts center. Parts such as the paper mount and photographs for creating the scrapbook and the procedural manual (explanation manual) for creating the scrapbook are packaged and the package is delivered to the residence of creator 2 from the scrapbook center.

While looking at the procedural manual and using the parts contained in the package, the creator 2 creates the scrapbook by affixing the photographs, printed decorative images and material such as ribbons and buttons to the mount in the manner that was carried out in the simulation.

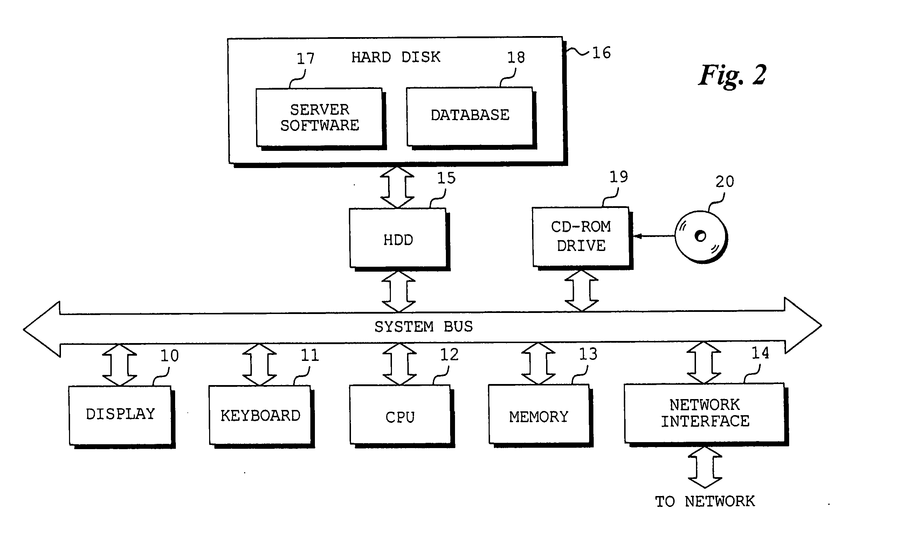

Fig. 2 is a block diagram illustrating the electrical configuration of the scrapbook server 5.

The operation of the overall scrapbook server 5 is controlled by a CPU 12.

The scrapbook server 5 includes a CD-ROM (Compact Disk - Read-Only Memory) drive 19. When a CD-ROM 20 on which server software 17 for controlling an operation (described later) has been stored is loaded in the CD-ROM drive 19, the server software 17 is installed on a hard disk 16. In addition to the server software 17, a database 18 has been stored on the hard disk 16. The server software 17, etc., stored on the hard disk 16 is accessed by a hard-disk drive 15.

The scrapbook server 5 includes a display unit 10 for displaying images, a keyboard 11 for inputting commands, etc., a memory 13 for storing data, etc., temporarily, and a network interface 14 for connecting to a network.

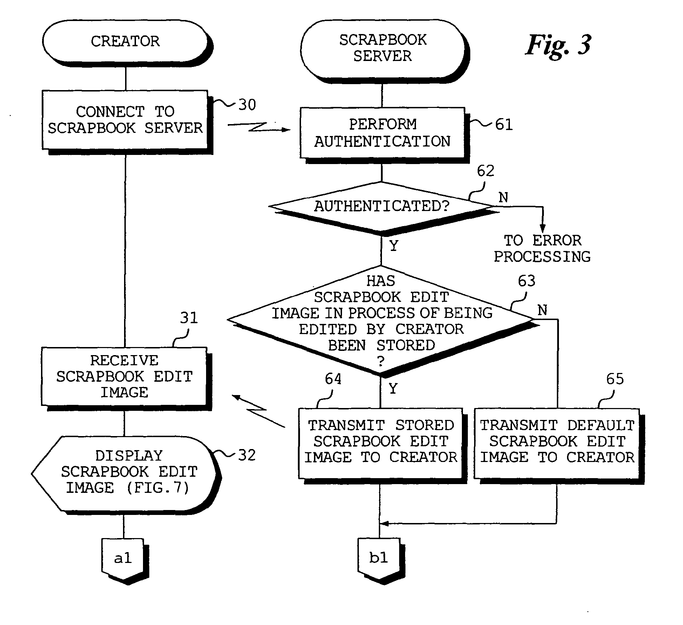

Figs. 3 to 6 are flowcharts illustrating processing executed between the computer 1 of the creator 2 and the scrapbook server 5. These flowcharts show the processing of the simulation for creating a scrapbook in the manner described above.

The computer 1 of the creator 2 and the scrapbook server 5 are connected (step 30) and the creator 2 is authenticated at the scrapbook server 5 (step 61). When the creator has been authenticated ("YES" at step 62), the scrapbook server 5 determines whether a scrapbook edit image, namely an image whose editing by the creator 2 is in progress, has been stored (step 63).

An image displayed on the display screen of the computer 1 of the creator 2 in a simulation is a scrapbook edit image. During or after a simulation, data representing the scrapbook edit image can be stored in the scrapbook server 5, and a simulation can be carried out using the stored scrapbook edit image. Whether a scrapbook edit image has been stored or not is determined for this reason. If a scrapbook edit image has been stored ("YES" at step 63), the data representing the stored scrapbook edit image is transmitted from the scrapbook server 5 to the computer 1 of the creator 2 (step 64). If a scrapbook edit image has not been stored ("NO" at step 63), then data representing a default scrapbook edit image is transmitted from the scrapbook server 5 to the computer 1 of creator 2 (step 65).

Upon receiving data representing a scrapbook edit image (step 31), the computer 1 of the creator 2 displays the scrapbook edit image on the display screen of the computer 1 (step 32). In this embodiment, it is assumed that the default scrapbook edit image is displayed.

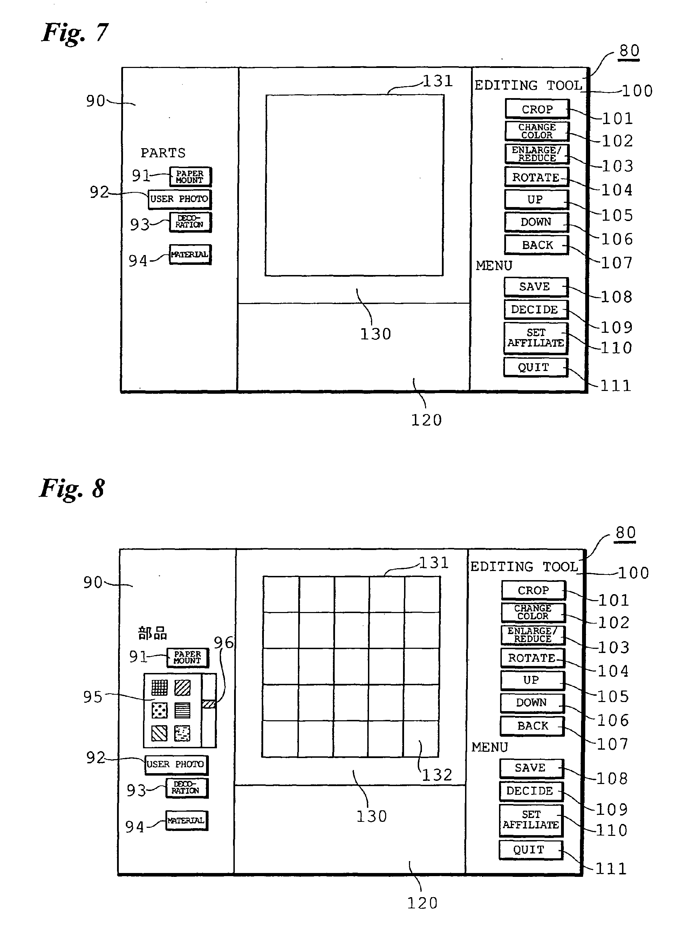

Fig. 7 illustrates an example of a window 80 displayed on the display screen of the computer 1 of creator 2.

The window 80 is formed to have a part selection area 90 on the left side, a command issuing area 100 on the right side, a part-color specifying area 120 at bottom center, and a scrapbook edit image display area 130 at the center.

The part selection area 90 includes a mount area 91, a user photo area 92, a decoration area 93 and a material area 94.

The mount area 91 is an area clicked by the creator if a paper mount is selected. If the mount area 91 is clicked, a small window 95 appears under the mount area 91, as illustrated in Fig. 8. Thumbnail mount images representing samples of paper mounts are displayed within the small window 95 that has appeared. A scroll bar 96 is formed on the right side of the small window 95. New thumbnail mount images appear in the small window 95 in response to the scroll bar 96 being moved up or down. Clicking a thumbnail mount image that is being displayed in the small window 95 selects the mount image.

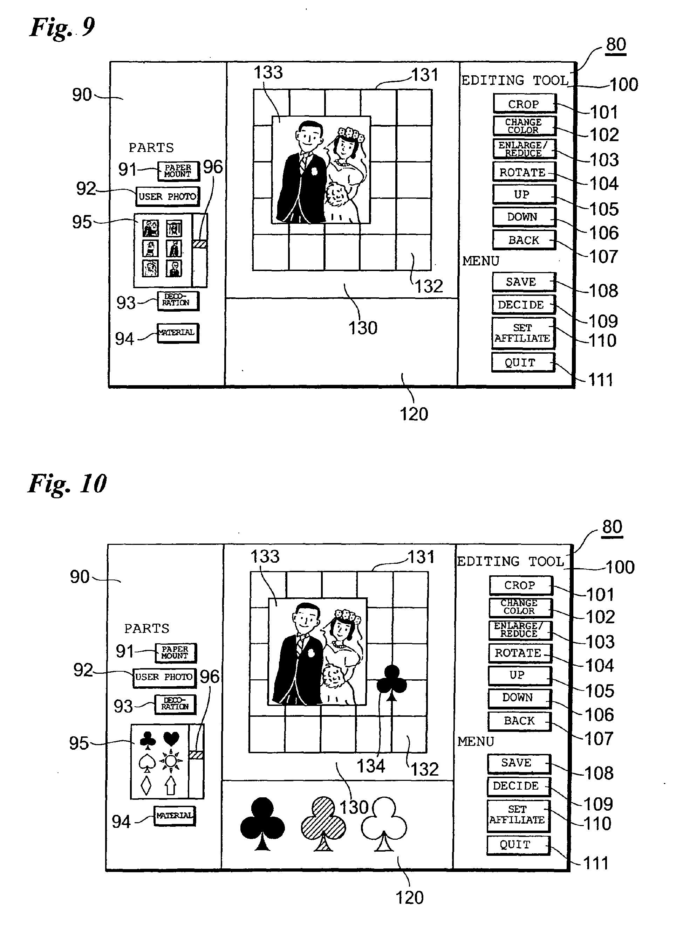

The user photo area 92 is an area clicked by the creator in a case where a photograph of the user (creator) is selected. If the user photo area 92 is clicked, the small window 95 appears under the user photo area 92, as illustrated in Fig. 9. Thumbnail images of user images are displayed in the small window 95 that has appeared. Clicking a thumbnail user image that is being displayed in the small window 95 selects the user photo.

The decoration area 93 is an area clicked by the creator in a case where a decorative image is selected. If the decoration area 93 is clicked, the small window 95 appears under the decoration area 93, as illustrated in Fig. 10. Thumbnail images of decorative images are displayed in the small window 95 that has appeared. Clicking a thumbnail decorative image being displayed in the small window 95 selects the decorative image.

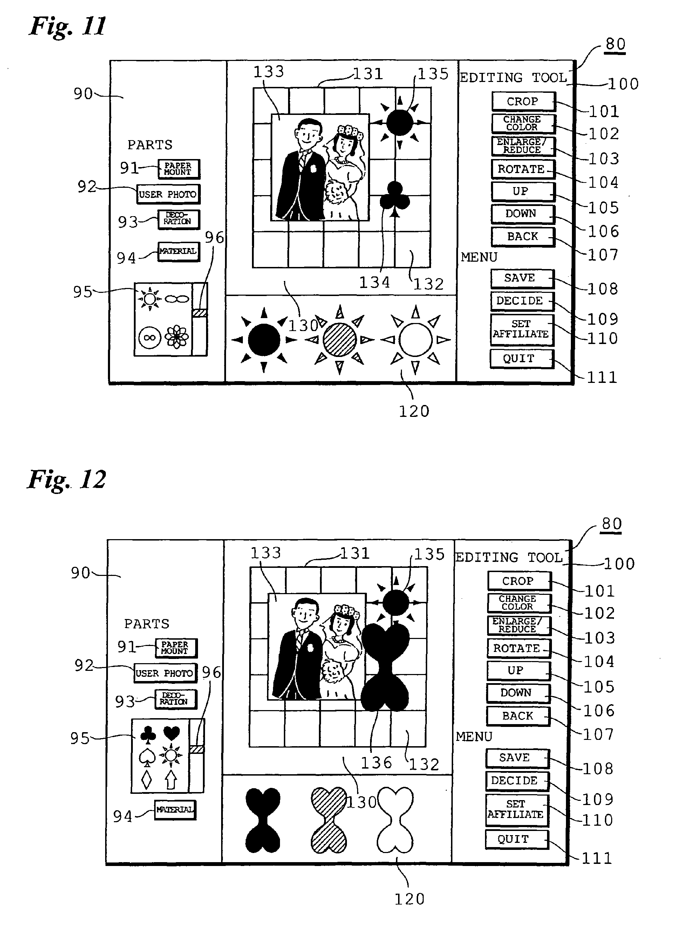

The material area 94 is an area clicked by the creator in a case where the user selects a decoration consisting of material having thickness, such as a button or ribbon, other than paper. If the material area 94 is clicked, the small window 95 appears under the material area 94, as illustrated in Fig. 11. Images of materials are displayed in the small window 95 that has appeared. Clicking a material image being displayed in the small window 95 selects the material.

The command issuing area 100 includes a crop area 101, a color-change area 102, an enlarge/reduce area 103, a rotate area 104, an UP area 105, a DOWN area 106, a BACK area 107, a save area 108, a decide area 109, an affiliate setting area 110 and a quit area 111.

The crop area 101 is an area clicked in a case where a portion of a part is cropped. A part image to be cropped is selected after the crop area 101 is clicked, and the portion to be cropped is designated by a cursor, thereby deciding the portion cropped. The color-change area 102 is an area clicked when a color is to be changed in a case where a plurality of colors are available for the same part. If a part image is selected after the color-change area 102 is clicked, the color of the selected part image changes. Naturally, it may be so arranged that a color pallet is displayed and a color designated from among the colors on the displayed color pallet. The enlarge/reduce area 103 is an area clicked in a case where a part image is enlarged or reduced in size. If a part image is selected after the enlarge/reduce area 103 is clicked, the selected part image is enlarged or reduced in size. It may be so arranged that an enlarge icon or reduce icon is displayed in order to specify enlargement or reduction.

The rotate area 104 is an area clicked in a case where a part image is rotated. By selecting a part image and dragging it after the rotate area 104 is clicked, the part image is rotated. The UP area 105 is clicked when a part image in a lower layer is made an upper layer. If a part image is clicked after the UP area 105 is clicked, this part image becomes one layer higher than the present layer. The DOWN area 106 is clicked when a part image in an upper layer is made a lower layer. If a part image is clicked after the DOWN area 106 is clicked, this part image becomes one layer lower than the present layer. The BACK area 107 restores the part image to the default. If a part image is selected after the BACK area 107 is clicked, the selected part image is restored to the default image.

The save area 108 is clicked when data representing a scrapbook image edited in the manner described above is stored in the scrapbook server 5. The decide area 109 is clicked whenever editing of a single part, such as selection, placement or color change, etc., of the part, is decided. The affiliate setting area 110 is clicked in a case where a third-party user utilizes a scrapbook edit image that has been created by the creator 2. The quit area 111 is clicked when editing is finished.

When a plurality of colors have been assigned to a selected part, parts having these plurality of colors are displayed in the part-color specifying area 120. The creator 2 selects the image of the part having the desired color from among the plurality of colors.

The scrapbook edit image display area 130 is an area in which a scrapbook edit image currently undergoing editing is displayed. If data representing a default scrapbook edit image is transmitted to the computer 1 of creator 2, as described above, a simple border 131 is displayed in the scrapbook edit image display area 130 in the manner illustrated in Fig. 7. The border 131 itself need not be displayed, as a matter of course.

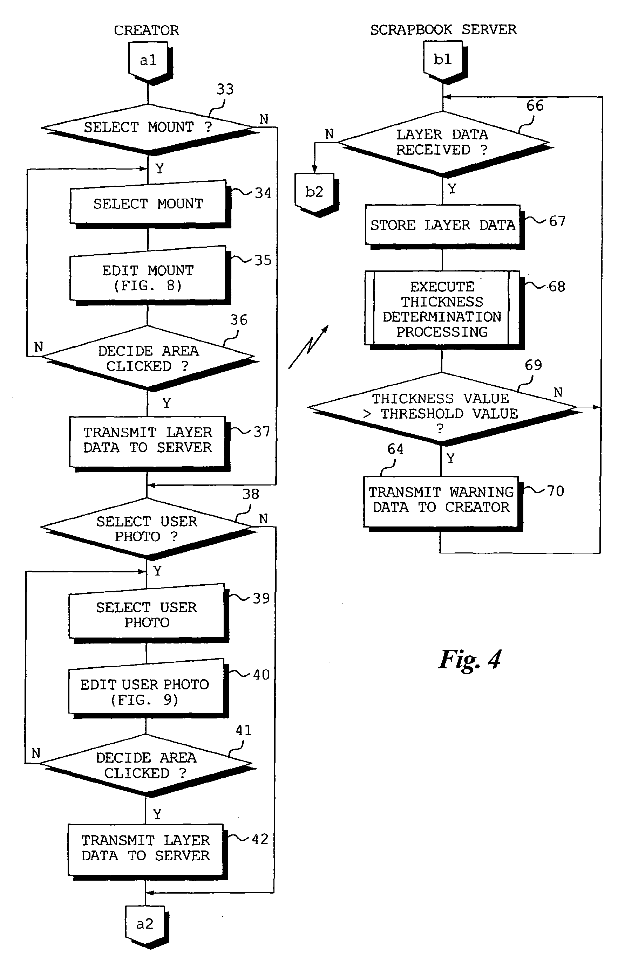

If the mount area 91 is clicked by the creator 2 with the window 80 of Fig. 7 being displayed on the display screen (step 33 in Fig. 4), paper mount images are displayed in the small window 95. A desired mount image is selected from the displayed mount images (step 34 in Fig. 4). As illustrated in Fig. 8, a selected mount image 132 is displayed in the scrapbook edit image display area 130 as the scrapbook edit image 131. Next, the selected mount image is subjected to editing such as color change and enlargement/reduction (step 35 in Fig. 4). If the selected mount image is acceptable, the decide area 109 is clicked ("YES" at step 36 in Fig. 4). In response, layer data indicating editing information, etc., regarding the selected mount image is transmitted from the computer 1 of creator 2 to the scrapbook server 5 (step 37 in Fig. 4).

Next, if the user photo area 92 is clicked (step 38 in Fig. 4), images of user photos are displayed in the small window 95. It goes without saying that image data representing the images of the user photos has been stored in the scrapbook server 5 beforehand and that the images are transmitted from the scrapbook server 5 to the computer 1 of creator 2. If a user photo image is selected from among the user photo images being displayed in the small window 95, the scrapbook edit image 131 in which a selected user photo image 133 is included is displayed in the scrapbook edit image display area 130, as illustrated in Fig. 9. The user photo image 133 is moved to a desired position by being dragged. Other part images are handled in a similar manner. The user photo image 133 is edited (step 40 in Fig. 4). If the decide area 109 is clicked ("YES" at step 41 in Fig. 4), then the layer data regarding the user photo image 133 is transmitted to the scrapbook server 5 (step 42 in Fig. 4).

Upon receiving the layer data ("YES" at step 66), the scrapbook server 5 stores the received layer data (step 67). Since images overlap in a simulation, any number of images can be superimposed regardless of the thickness of parts. When a scrapbook is actually created, however, there is a limit to overlapping because of the thickness of paper and thickness of materials such as ribbons and buttons. Accordingly, processing is executed to determine whether thickness will exceed a prescribed threshold value in a case where parts are superimposed in an actual scrapbook (step 68 in Fig. 4). If the thickness is greater than the prescribed threshold value ("YES" at step 69 in Fig. 4), then warning data is transmitted from the scrapbook server 5 to the computer 1 of creator 2 (step 70 in Fig. 4).

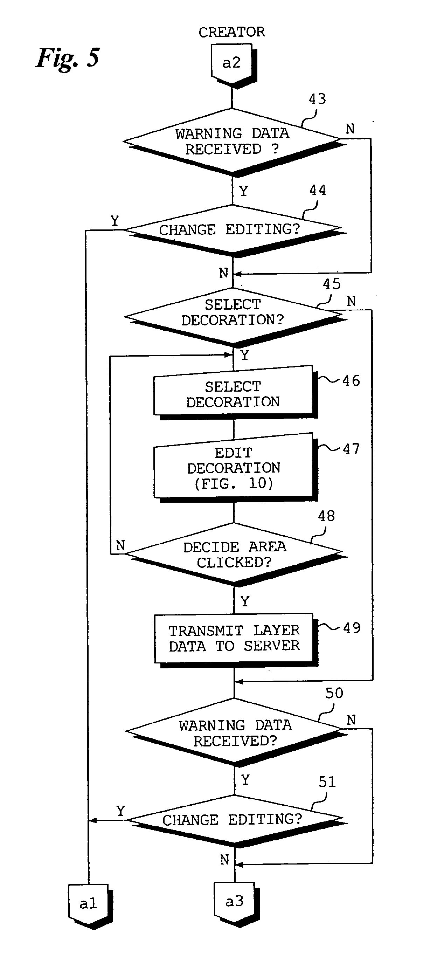

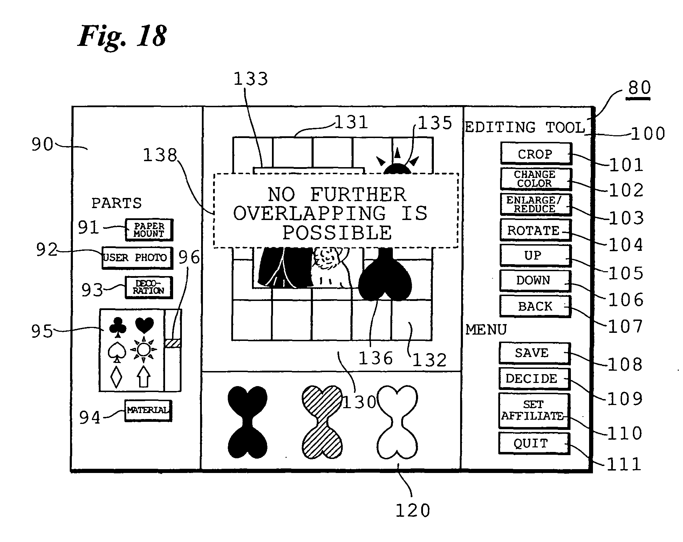

Upon receiving the warning data transmitted from the scrapbook server 5 ("YES" at step 43 in Fig. 5), a warning message is displayed in the window 80 (see Fig. 18) and an area for specifying a change in editing appears. By clicking the editing change area, editing can be performed again.

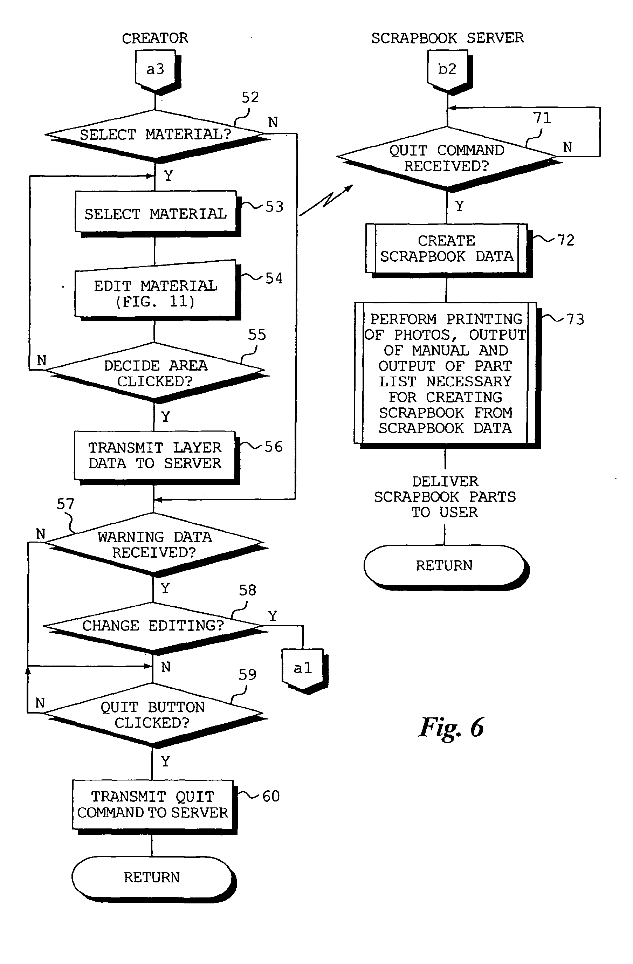

If warning data is not received ("NO" at step 43 in Fig. 5), or if editing is not changed ("NO" at step 44 in Fig. 5) even though warning data has been received, the decoration area 93 is clicked ("YES" at step 45 in Fig. 5). A decorative image is selected from within the small window 95 (step 46 in Fig. 5) and the selected decorative image is displayed on the scrapbook image, as illustrated in Fig. 10. The selected decorative image is edited (step 47 in Fig. 5). If the decide area 109 is clicked ("YES" at step 48 in Fig. 5), layer data regarding the selected decorative image is transmitted to the scrapbook server 5 (step 49 in Fig. 5). If warning data is not received by the computer 1 ("NO" at step 50 in Fig. 5), or if editing is not changed ("NO" at step 51 in Fig. 5) even though warning data has been received, the material area 94 is clicked (step 52 in Fig. 6).

Material is selected from within the small window 95 (step 53 in Fig. 6) and the selected material image is displayed on the scrapbook edit image 131, as illustrated in Fig. 11. The selected material image is edited (step 54 in Fig. 6). If the decide area 109 is clicked (step 55 in Fig. 6), then layer data is transmitted to the scrapbook server 5 (step 56). Part editing continues (step 59 in Fig. 6) unless the quit area 111 is clicked. For example, as illustrated in Fig. 12, editing is performed in such a manner that a decorative image 136 conceals decorative image 134 and partially overlaps a material image 135 and user photo image 133.

If quit area 111 is clicked ("YES" at step 59 in Fig. 6), a quit command is transmitted from the computer 1 of creator 2 to the scrapbook server 5 (step 60 in Fig. 6).

Upon receiving the quit command (step 71 in Fig. 6), the scrapbook server 5 creates scrapbook data using layer data that has been stored (step 72 in Fig. 6). Printing of photographs, output of a procedural manual and output of a parts list, etc., necessary for a scrapbook are performed using the created scrapbook data (step 73 in Fig. 6). The paper mount, photographs, decorative images and material, etc. necessary for the scrapbook are packaged and delivered to the residence of the creator 2. While looking at the procedural manual and using the parts contained in the package, the creator 2 creates the scrapbook in the manner that was simulated.

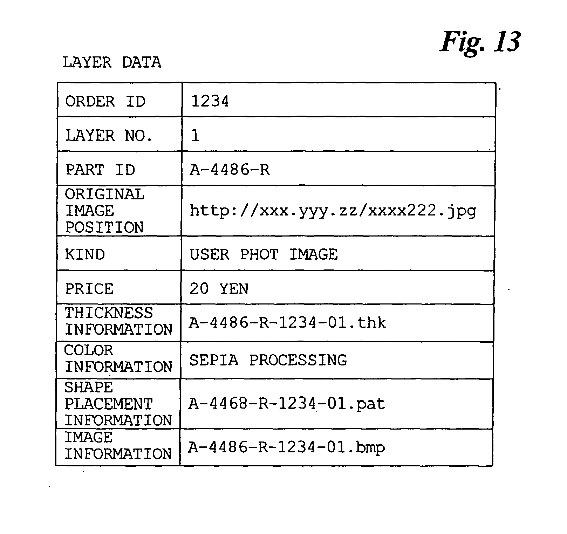

Fig. 13 illustrates an example of layer data.

The layer data is generated for every single part selected by the user in the manner described above. The layer data includes an order ID, layer number, part ID, original image position, kind, price, thickness information, color processing, shape placement information and image information. The order ID is for identifying an order and is assigned on a per-order basis. By creating layers containing part images selected in the manner described above and superimposing these layers, scrapbook edit images are generated one after another. The layer number is a number for identifying the layer. The layer number of the mount is 0. The original image position indicates the location at which the part image has been stored. The kind indicates the type of part. The price is the fee to use the part. If the image is the user image, then the price includes the printing fee. The thickness information is information indicating the actual thickness of the part. If the part has been subjected to color processing, then color processing indicates the content of this processing. The shape placement information is information indicating the placement position of the part. The image information indicates the pixel level serving as the image of the part.

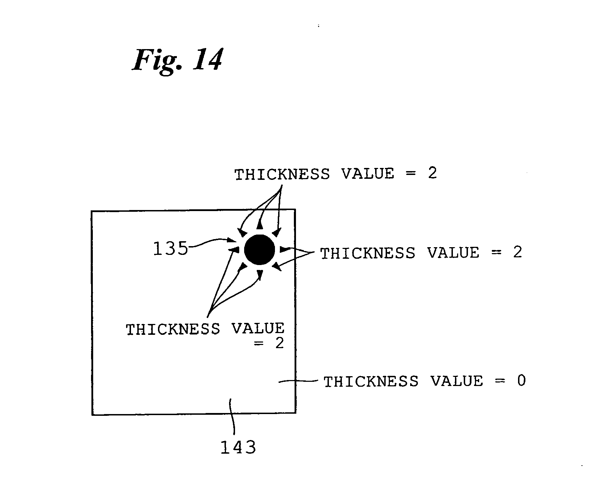

Fig. 14 illustrates thickness values indicated by the thickness information represented by the layer data.

A layer is created by selecting a part image, as described above. Assume that a layer 143 has been created by selecting part image 135. The part image 135 is an image representing the material part. The actual material utilized has a thickness of 2 mm. In layer 143, therefore, the area of part image 135 has a thickness value of 2, and the area other than that occupied by the part image 135 has a thickness value of 0. Such thickness information has been stored in the above-described layer data.

In a manner similar to the thickness information, the shape placement information indicates information regarding the position of the part image 135 (a position designated by the creator 2). The image information indicates information regarding the pixel level of the part image 135 (the pixel level with regard to RGB, usually represented by 256 levels of 0 to 255).

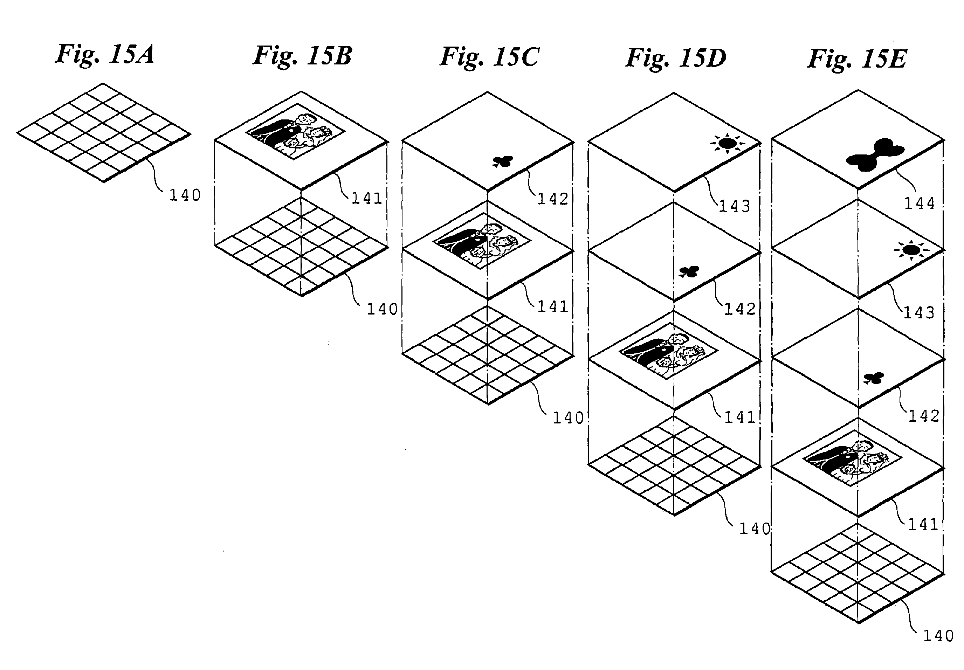

Figs. 15A to 15E illustrate layers. The layers can be represented by layer data, as mentioned above.

With reference to Fig. 15A, a layer 140 is obtained by selecting the mount image 132. A layer 141 is obtained by selecting the user image 133, as illustrated in Fig. 15B. By superimposing the layer 141 on the layer 140, the scrapbook edit image 131 is obtained, as illustrated in Fig. 9. A layer 142 is obtained by selecting the decorative image 134, as illustrated in Fig. 15C, a layer 143 is obtained by selecting the material image 135, as illustrated in Fig. 15D, and a layer 144 is obtained by selecting the decorative image 136, as illustrated in Fig. 15E. By superimposing these layers 140 to 144, the scrapbook edit image 131 is obtained, as shown in Fig. 12. The positions of the part images in the layers are positions designated by the user.

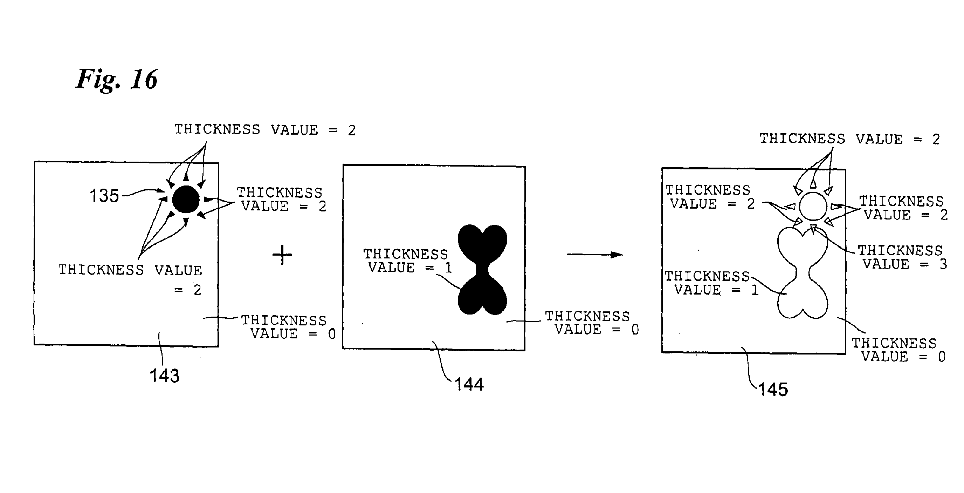

Fig. 16 illustrates thickness detection.

Assume that thickness produced by superimposing layers 143 and 144 is detected. The thickness values of layers 143 and 144 can be detected based upon the thickness information contained in the layer data. The layer 143 contains the material image 135, and the layer 144 contains the decorative image 136. The thickness value of the material image 135 contained in the layer 143 is 2, and the thickness value of the decorative image 136 contained in the layer 144 is 1. In image 145 obtained by superimposing the layers 143 and 144, the thickness value of the portion where the material image 135 and decorative image 136 overlap is 3. By raster-scanning the overlap image 145, the thickness values of the overlap image obtained by superimposing the layers 143 and 144 can be detected at every portion.

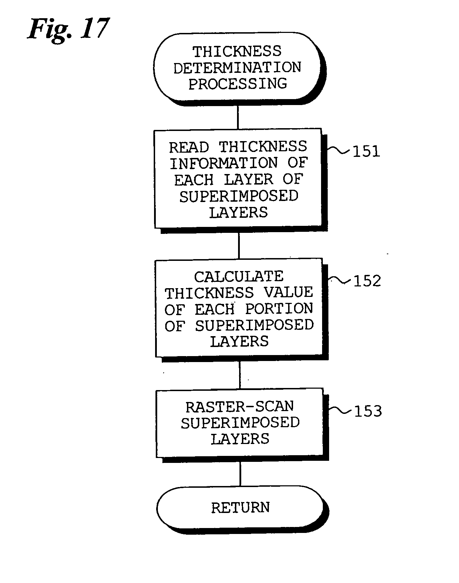

Fig. 17 is a flowchart illustrating thickness determination processing (step 68 in Fig. 4).

Thickness information of each layer superimposed as described above is read (step 151) and thickness values at each of the portions of the superimposed layers are calculated (step 152). The superimposed layers are raster-scanned (step 153) and the thickness value of each portion is detected. If the maximum value of the detected thickness values is greater than the threshold value, a warning message 138 is displayed on the computer 1 of creator 2, as illustrated in Fig. 18.

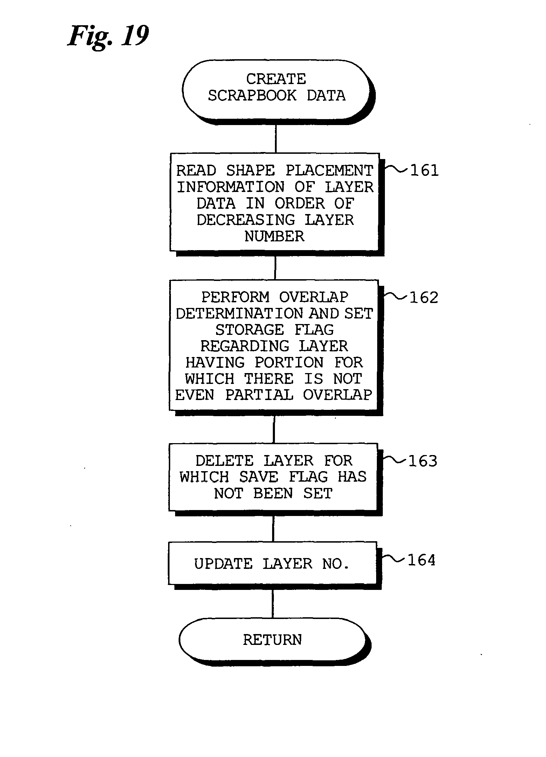

Fig. 19 is a flowchart illustrating processing for creating scrapbook data (step 72 in Fig. 6). The scrapbook data is a set of layer data. Unwanted layer data has been deleted from this set of layer data.

First, shape placement information of the layer data is read in order of decreasing layer number (step 161). On the basis of the read shape placement information, all layers are superimposed and a save flag is set with regard to a layer containing a part image having a portion for which there is not even partial overlap among all part images contained in all layers (step 162). With regard to a part image for which there is overlap with all part images, a save flag is not set as long as the layer containing this part image is not the uppermost layer. A layer for which the save flag has not been set is deleted (step 163). That is, the layer data corresponding to a layer for which a save flag has not been set is deleted. By deleting layer data, updating is performed in such a manner that the layer numbers become consecutive (step 164) .

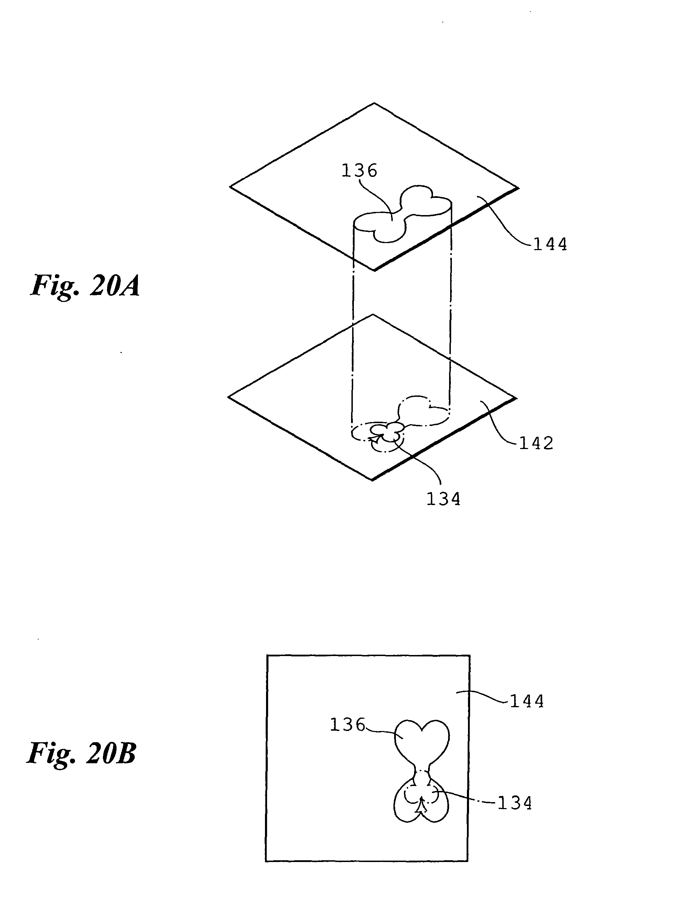

Fig. 20A illustrates the manner in which layers are superimposed, and Fig. 20B illustrates layers in superimposed form.

Assume that by superimposing the layers 144 and 143 in the manner shown in Fig. 20A, the part image 134 contained in the lower layer 142 is completely hidden by the part image 136 contained in the upper layer 144, as illustrated in Fig. 20B. In a case where the part image 134 contained in the lower layer 142 is thus completely hidden by the part image 136 contained in the upper layer 144, the save flag is not set for the lower layer 142 and is deleted, and the layer data is deleted as well. Layer data for which a part image is thus completely hidden is deleted and the set of remaining layer data becomes the scrapbook data. A procedural manual, etc., is created based upon the scrapbook data. A creation procedure for which a part will not be exposed on the surface of the scrapbook is not described in the procedural manual. Further, a part specified by layer data that has been deleted is not included in the package delivered to the creator 2. Thus, an unwanted part can be prevented from being delivered to the creator of the scrapbook.

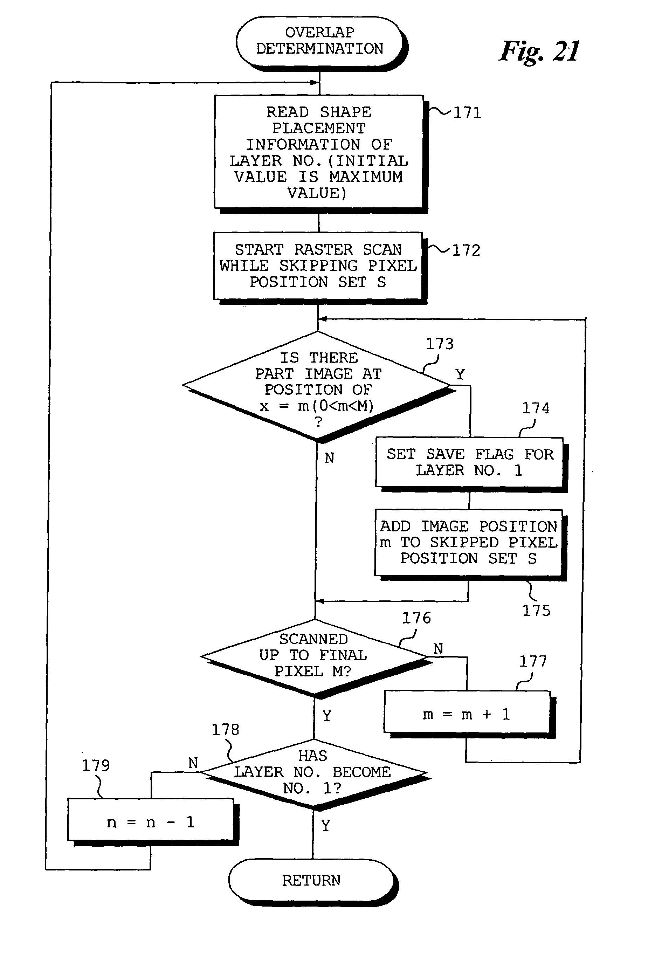

Fig. 21 is a flowchart illustrating overlap determination processing (step 162 in Fig. 19).

Shape placement information of layer number n (the initial value is the maximum value and corresponds to the selected number of part images with the exception of the mount) is read (step 71). As will be described later, raster scanning is started while skipping a pixel position set S in which a part image exists in the upper layer (step 172).

It is determined whether a part image exists at a position x = m (0<m<M, where M is the maximum value of a pixel in the layer) in the layer (step 173). If a part image exists, this means the inclusion of a part image that does not overlap a part image contained in the layer above the layer in which the first-mentioned part image exists. Accordingly, a save flag is set for this layer number (step 174). The position m at which the part image has been detected is added to the skipped set S of pixel positions (step 175). If a part image does not exist at the position x = m ("NO" at step 173), the processing of steps 174 and 175 is skipped.

The position m is incremented in such a manner that raster scanning is performed up to the final position M in this layer ("YES" at step 176; step 177). Overlap determination is repeated with regard to the lower layer until the layer number becomes 1 (steps 178, 179).

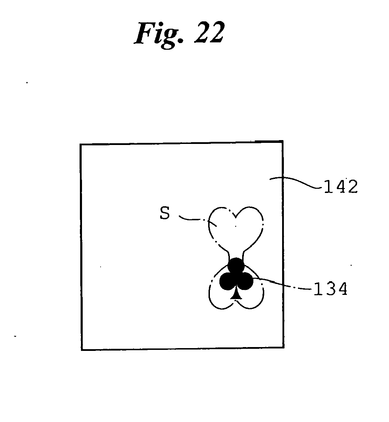

Fig. 22 illustrates the manner in which a layer is superimposed.

The part image 136 is a part image in the upper layer, and the part image 134 is a part image in the lower layer. The position at which the part image 136 contained in the upper layer exists is added to the skipped pixel position set S, as described above. In a case where the upper layer and the lower layer have been superimposed, the part image 134 in the lower layer comes to be included in the skipped pixel position set S and a part image will not exist at a position that lies outside the skipped pixel position set S. As described above, therefore, a save flag is not set for the layer 142 containing the part image 134 and becomes the target for deletion.

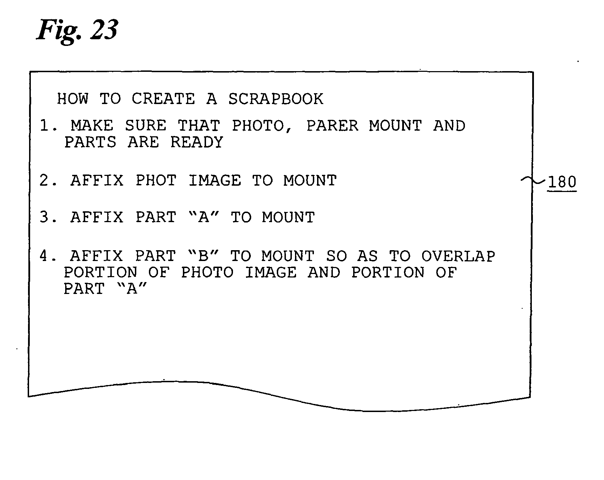

Fig. 23 illustrates an example of a procedural manual.

As mentioned above, a procedural manual 180 is bundled together with a mount and parts in the package delivered to the creator of the scrapbook. While viewing the procedural manual 180, the creator creates the scrapbook in the manner that was simulated.

The procedural manual 180 is created based upon scrapbook data. The scrapbook data is composed of a plurality of items of layer data, as mentioned above; layer data which will affix a part that will not appear on the surface of the scrapbook has been deleted. Accordingly, an operation affixing a part that will not appear on the surface of the scrapbook is not described in the procedural manual 180 even if it is an operation that was performed by the creator in the simulation. By creating the scrapbook while observing the procedural manual 180, the affixing of parts needlessly can be prevented. For example, as illustrated in Fig. 10, the decorative part 134 has been affixed to the mount image 132 in the simulation. However, since the decorative image 134 is completely hidden by the decorative image 136, as illustrated in Fig. 12, the procedural step of affixing the decorative image 134 is not set forth in the procedural manual 180.

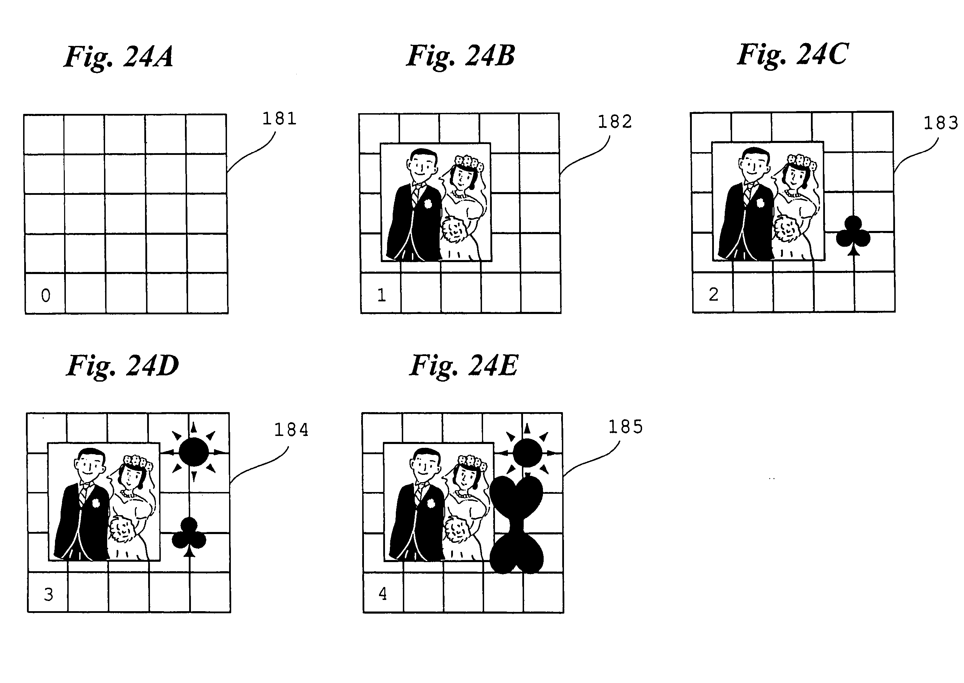

Figs. 24A to 24E illustrate another example of a procedural manual.

This procedural manual is referred to as a "pictorial procedural manual". This manual is similar to what would be obtained by printing, sheet by sheet whenever a part is affixed, scrapbook images generated successively in the simulation performed by the creator 2 in the manner illustrated in Figs. 7 to 12. Naturally, the scrapbook images may actually be printed sheet by sheet whenever a part is affixed and the printed images themselves may be adopted as the pictorial procedural manual.

The pictorial procedural manual can also be created using scrapbook data. As mentioned above, scrapbook data is a set of a plurality of items of layer data, and a single sheet of a pictorial procedural manual is created by each item of layer data among the plurality of items thereof.

The layer number included in the layer data is written at the lower left of each of sheets 181 to 185 of the pictorial procedural manual illustrated in Figs. 24A to 24E, respectively. The layers corresponding to the sheets of the pictorial procedural manual are assumed to be color part images. However, it is assumed that the part image in the underlying layer is monochrome (it may be represented solely by an outline). For example, in sheet 183 of the pictorial procedural manual shown in Fig. 24C, the part image 134 is a color image, but the user image 133 is monochrome. In sheet 184 of the pictorial procedural manual shown in Fig. 24D, the part image 135 is a color image and the part image 134 and user image 133 are monochrome images. In sheet 185 of the pictorial procedural manual shown in Fig. 24E, the part image 136 is a color image, but the part images 133 to 135 are monochrome. Since the part image of an underlying layer is not a color image but is represented by a monochrome image, which part corresponding to a part image should be affixed above can be determined at a glance. The sequence through which the scrapbook is created can also be determined from the layer number.

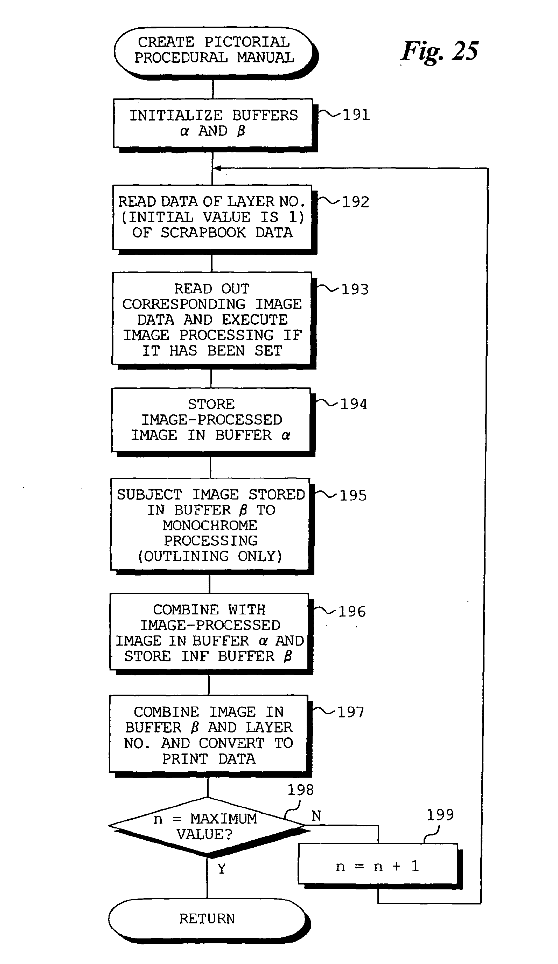

Fig. 25 is a flowchart illustrating processing for creating a pictorial procedural manual.

The above-described pictorial procedural manual is such that the part image contained in the upper layer of a superimposed layer is in color, while a part image contained in the underlying layer is monochrome (or an outline only). For this reason, there are defined a buffer α (a prescribed first memory area of memory 13) for temporarily storing image data representing a color part image contained in an upper layer, and a buffer β (a prescribed second memory area of memory 13) for temporarily storing image data representing a monochrome part image. The buffers α and β are initialized (step 191).

Layer data of layer number n (the initial value of n is 1) is read from among the layer data constituting the scrapbook data (step 192). Image data representing a part image contained in a layer specified by the read layer data is read, and image processing is executed in a case where image processing such as color processing has been set for this part image (step 193). The image data that has undergone image processing is stored in buffer α (step 194). The layer of layer number 1 is the layer 141 overlying layer 140 of the mount, as illustrated in Fig. 15B. If color processing has been set for the part image 133 contained in layer 140, then image processing is applied to the image data representing the part image 133 and the processing data is stored in buffer α.

The image data that has been stored in buffer β is subjected to monochrome processing (or outlining processing for producing only an outline) (step 195). The monochrome part image represented by the image data that has been stored in buffer β is combined with the layer containing the image-processed color part image represented by the image data that has been stored in buffer α and the result is stored in buffer β (step 196). The layer number is combined with the layer that has been stored in buffer β and the result is converted to print data (step 197). One sheet of the pictorial procedural manual is obtained by this print data. If the part image contained in the layer of layer number 1 has been subjected to image processing, image data will not have been stored in buffer β. As illustrated in Fig. 24B, therefore, a sheet of the pictorial procedural manual on which a part image has been affixed to the mount image is obtained.

The processing of steps 192 to 197 is repeated while incrementing the layer number until layer number n takes on the maximum value ("NO" at step 198). If the above-mentioned processing is executed, a superimposed layer corresponding to the sheet 182 of the pictorial procedural manual illustrated in Fig. 24B will have been stored in buffer β. The part image 133 contained in this layer is made monochrome (the mount image 132 also is made monochrome if necessary) and this is combined with the color part image 134 contained in the upper layer, whereby the sheet 183 of the pictorial procedural manual shown in Fig. 24C is obtained. Similarly, the sheets 181 to 185 of the pictorial procedural manual, in which the part image 135 is in color and the other part images 133 and 134 are monochrome, as illustrated in Fig. 24D, and in which the part image 136 is in color and the other part images 133 and 135 are monochrome, as illustrated in Fig. 24E, are obtained.

In the pictorial procedural manual described above, the part image contained in the uppermost layer is assumed to be a color image and the part images contained in the underlying layers are assumed to be monochrome. However, the results of printing the scrapbook edit image illustrated in Figs. 8 to 12 may just as well be adopted as the pictorial procedural manual.

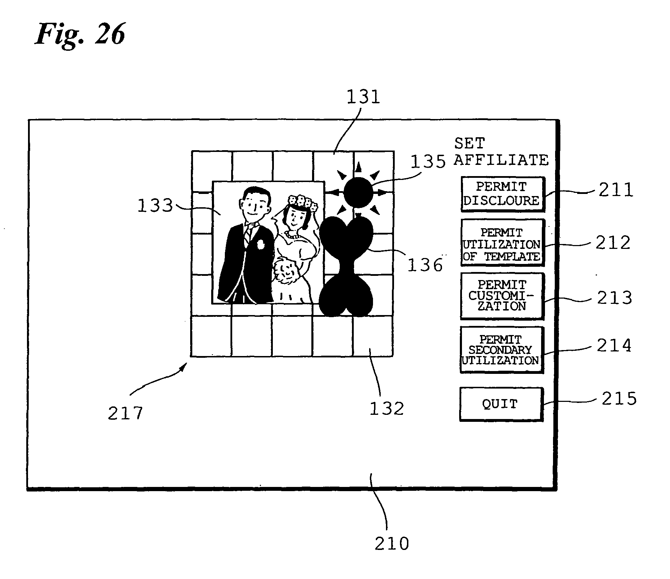

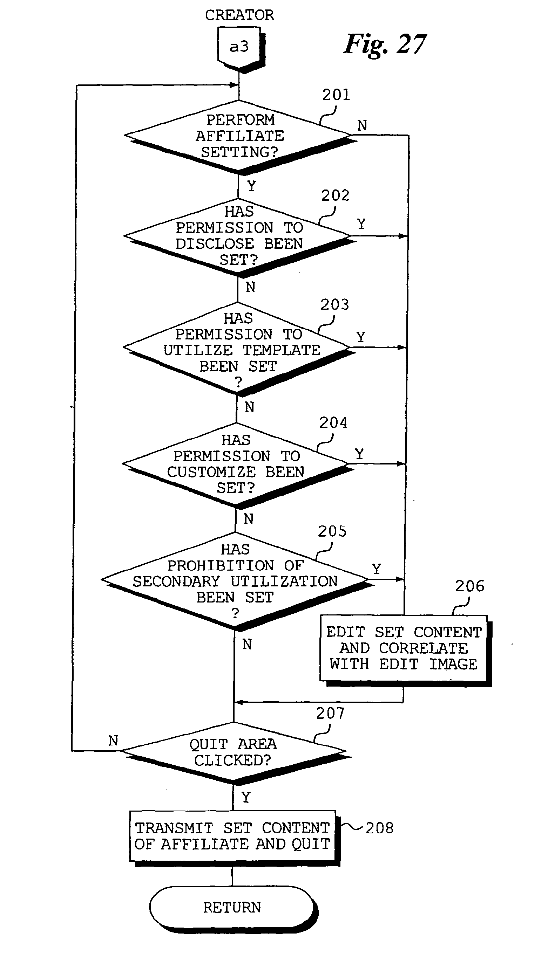

Figs. 26 and 27 concern the setting of an affiliate, in which Fig. 26 illustrates a window displayed on the display screen of the computer 1 of creator 2, and Fig. 27 is a flowchart illustrating processing for setting an affiliate.

The above-described scrapbook is created by the creator and scrapbook images obtained by imaging the created scrapbook are uploaded to a website, thereby enabling the scrapbook to be utilized by an affiliate. The setting of mode of utilization by the affiliate is referred to as an "affiliate setting". Naturally, it may be so arranged that the mode in which an affiliate is utilized is set utilizing the scrapbook edit image finally obtained by a simulation in the manner described above without utilizing a scrapbook edit image obtained by imaging a created scrapbook.

By clicking the affiliate setting area 110 included in the window 80 illustrated in Figs. 7 to 12, an affiliate setting window 210 shown in Fig. 26 is displayed on the display screen of the computer 1 of creator 2. The affiliate setting window 210 includes a disclosure permission area 211, a template-utilization permission area 212, a customization permission area 213, a secondary-utilization prohibition area 214 and a quit area 215.

The disclosure permission area 211 permits the viewing of a scrapbook edit image. However, this area is clicked by the creator 2 in a case where a third party is not permitted to simulate the scrapbook using the scrapbook edit image.

The template-utilization permission area 212 is clicked by the creator 2 in a case where simulation of the scrapbook is permitted using a scrapbook edit image from which the photographic image of the creator 2 has been excluded. If template utilization has been permitted, the photographic image of the creator 2 is removed from the scrapbook edit image and the photographic image of the user can be affixed instead.

The customization permission area 213 is clicked by the creator 2 in a case where the scrapbook edit image of the creator 2 is permitted to be customized.

In a case where a scrapbook edit image created by a user who has utilized a scrapbook edit image of the creator 2 contains a decorative image created by the creator 2, the secondary-utilization prohibition area 214 is clicked by the creator 2 if this decorative image is not permitted to be utilized by yet another party. In a case where a scrapbook edit image of the creator 2 contains a decorative image created by the creator 2, a user who has utilized the scrapbook edit image of the creator 2 is capable of setting only disclosure permission in an affiliate setting made by the user.

With reference to Fig. 27, the affiliate setting area 110 is clicked by the creator 2 if the affiliate setting is made ("YES" at step 201). In response, the affiliate setting window appears on the display screen of the computer 1 of creator 2. If the disclosure permission area 211 is clicked ("YES" at step 202), then disclosure permission is set. If the template-utilization permission area 212 is clicked ("YES" at step 203), then template permission is set. If the customization permission area 213 is clicked ("YES" at step 204), then customization permission is set. If the secondary-utilization prohibition area 214 is clicked ("YES" at step 205), then prohibition of secondary utilization is set. Data indicating the set content is correlated with the scrapbook edit image (step 206). For example, data or a flag indicating the set content is added to the above-described layer data.

If the quit area 215 is clicked ("YES" at step 207), a command to quit the setting of an affiliate is transmitted from the computer 1 of creator 2 to the scrapbook server 5 (step 208).

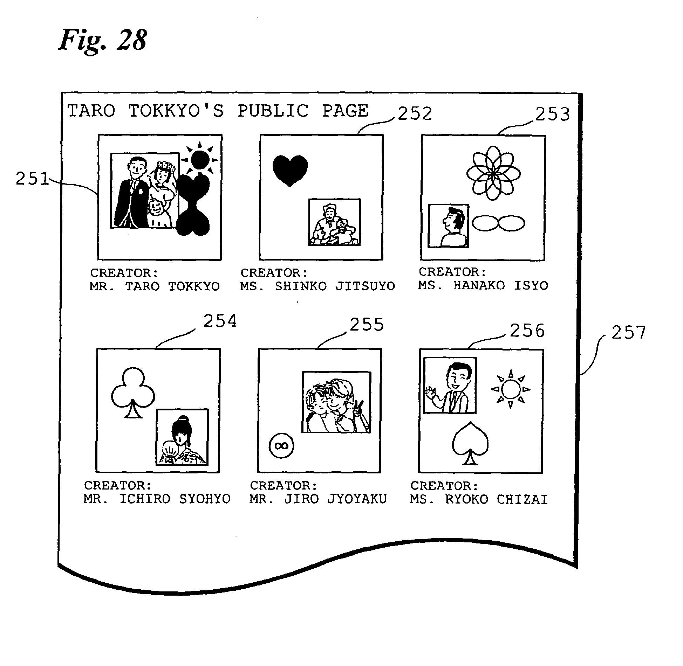

In Figs. 28 to 30, a user other than the creator 2 performs a simulation for scrapbook creation (creates a scrapbook edit image) using a scrapbook image created by the creator 2, in the manner described above. It goes without saying that the above-mentioned scrapbook data has been stored in the scrapbook server 5 on a per-creator basis.

Fig. 28 illustrates an example of an image (a public page 257) at a site where a scrapbook edit image (scrapbook image) created by Taro Tokkyo, who is creator 2, is being displayed.

The public page 257 includes not only a thumbnail image 251 of a scrapbook edit image created by Taro Tokkyo, who is creator 2, but also thumbnail images 252, 253, 254, 256, etc., of scrapbook edit images created by other creators.

The thumbnail images 251, etc., are clickable. By clicking one of the thumbnail images 251, etc., request data is transmitted to the site containing the scrapbook edit image that corresponds to the clicked thumbnail image. When the request data is received by the scrapbook server, a window containing the scrapbook edit image corresponding to the clicked thumbnail image 251, etc., is displayed on the display screen of the computer of the user. For example, if the thumbnail image 251 is clicked by the user, the user window 80 shown in Fig. 12 is displayed on the display screen of the user computer.

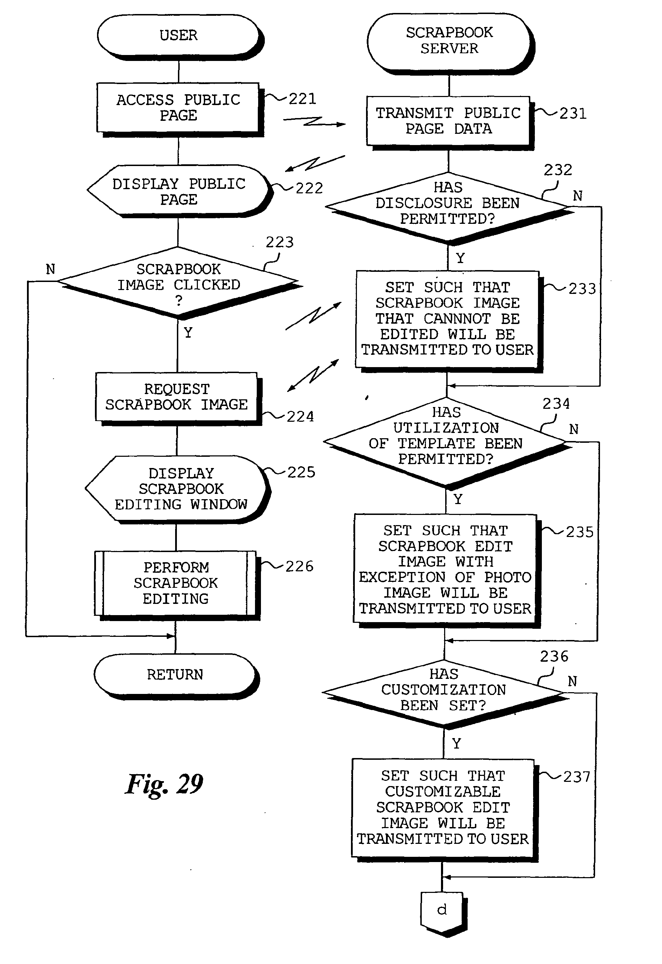

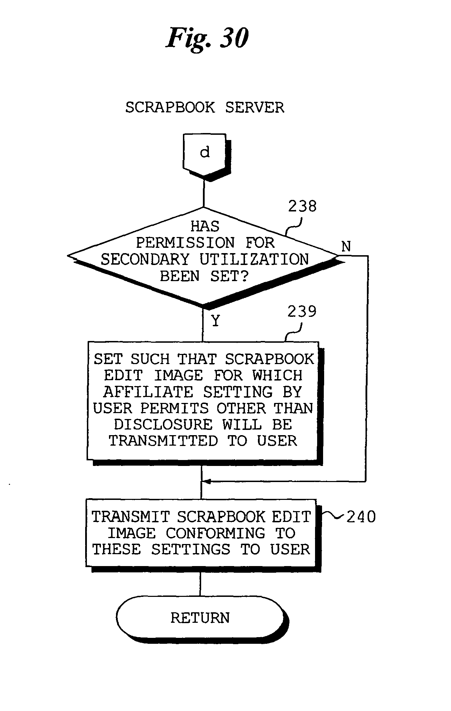

Figs. 29 and 30 are flowcharts illustrating processing executed between the user computer and the scrapbook server.

A command to access a public page is transmitted to the scrapbook server 5 by the user computer (step 221). When the access command is received by the scrapbook server 5, the public page data is transmitted from the scrapbook server 5 to the user computer (step 231).

When the public page data is received by the user computer, the public page is displayed on the display screen of the user computer, as illustrated in Fig. 28 (step 222). If a thumbnail image of a scrapbook edit image contained on the public page is clicked ("YES" at step 223), request data for requesting the corresponding scrapbook edit image is transmitted from the user computer to the scrapbook server (step 224).

When the request data transmitted from the user computer is received by the scrapbook server 5, the affiliate setting of the scrapbook edit image corresponding to the request is checked. If disclosure has been permitted ("YES" at step 232), the image data representing the scrapbook image whose viewing only is permitted but whose editing is not is set so as to be transmitted to the user (step 233). If permission to utilize the template has been set ("YES" at step 234), image data representing the scrapbook edit image with the exception of the photographic image is set so as to be transmitted to the user (step 235). If permission for customization has been set ("YES" at step 236), then image data representing a scrapbook edit image for which movement or deletion, etc., of a part image constituting the scrapbook edit image is permitted is set so as to be transmitted to the user to enable customization (step 237). If prohibition of secondary utilization has been set ("NO" at step 238), then edit image data representing a scrapbook edit image for which the affiliate setting by the user does not permit anything but disclosure is set so as to be transmitted to the user (step 239).

Image data representing a scrapbook edit image (a scrapbook image for editing) conforming to the above-mentioned settings is transmitted from the scrapbook server 5 to the user computer (step 240).

When the image data representing scrapbook edit image is received by the user computer, the scrapbook edit image is displayed on the display screen of the computer, as illustrated in Fig. 12 (step 225). A scrapbook simulation such as editing of a scrapbook image can be performed utilizing the scrapbook edit image created by a creator who is another individual, and an order for creating a scrapbook in the manner described above can be issued (step 226).

If the user performs a simulation and issues an order for creating a scrapbook (i.e., if the quit command is transmitted), utilization-mode data indicating how the scrapbook edit image is to be utilized also is transmitted to the scrapbook server 5. The utilization-mode data is created based upon the editing history of the scrapbook edit image. The editing history is updated by clicking the decide area 109 whenever the scrapbook edit image is edited. Data representing the editing history is transmitted from the user client computer to the scrapbook server 5 as utilization-mode data. Since the user editing history is ascertained at the scrapbook server 5, the latter makes a comparison with the scrapbook edit image represented by the scrapbook edit image data of the creator that was transmitted from the scrapbook server 5, whereby the scrapbook server 5 can detect how the user utilized the scrapbook edit image of the other person. By comparing the scrapbook edit image finally decided by the user and the scrapbook edit image of the creator represented by the scrapbook edit image data that was transmitted from the scrapbook server 5 to the user client computer, whether the user utilized the scrapbook edit image of the creator can also be detected. In this case, identification data, which indicates which part image, etc., has been designated and which is transmitted from the user client computer to the scrapbook server 5 whenever the decide area 109 is clicked serves as the utilization-mode data.

In a case where a scrapbook edit image created by a creator who is another individual (it goes without saying that the creator and the user may be the same and may perform the above-described editing utilizing his/her own created scrapbook edit image) has been utilized and edited, the above-described procedural manual also is in accordance with the content of editing. For example, if, in a case where the scrapbook edit image 131 shown in Fig. 12 has been utilized, only the photographic image 133 has been changed to another photographic image, the procedural manual that is created indicates the procedure for creating a scrapbook in which only the photographic image has been changed to a new one. Further, a pictorial procedural manual in which the photographic image 133 has been changed in the illustration of Figs. 24A to 24E is created. Even in the case where a simulation for creating a scrapbook has been performed utilizing a scrapbook edit image created by another individual, a procedural manual that contains a procedure for creating the scrapbook created by this other individual is created and is delivered to the user. Also in a case where a scrapbook creation simulation has been performed utilizing a scrapbook edit image created by another individual with a different mode of utilization, it will be understood that a procedural manual that enables the user to create the scrapbook is similarly created and delivered to the user.

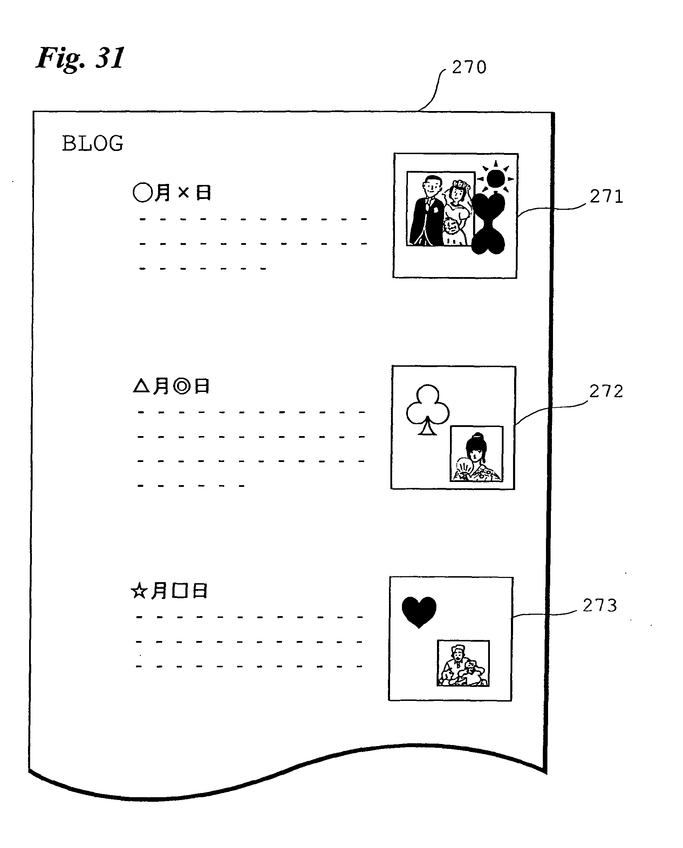

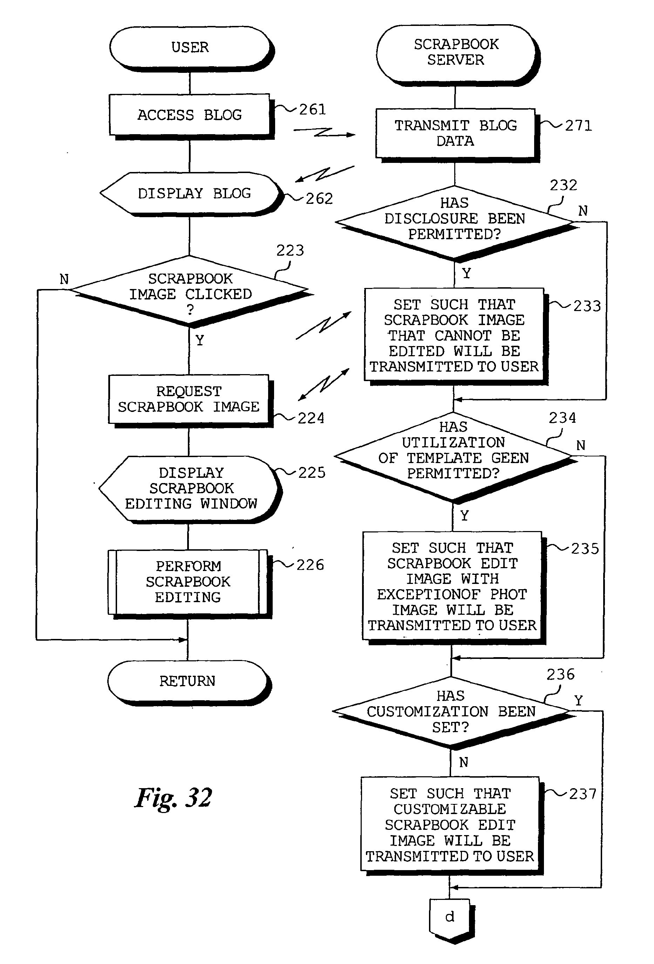

Figs. 31 and 32 illustrate another embodiment in which a scrapbook is simulated utilizing a scrapbook edit image created by the creator 2. Fig. 31 illustrates the window of a blog displayed on the display screen of the user computer.

A blog window 270 includes not only a thumbnail image 271 of a scrapbook edit image created by Taro Tokkyo, who is the creator 2, but also thumbnail images 272, 273, 274, etc., of scrapbook edit images created by other creators. These thumbnail images 272, etc., are the same as the thumbnail images 251, etc., contained on the public page described above and are clickable. Data for displaying the blog window 270 may be transmitted to the client computer from a server that is different from the scrapbook server 5.

Fig. 32 corresponds to Fig. 29 and is a flowchart illustrating processing executed between the user computer and the scrapbook server. Processing steps in Fig. 32 identical with those shown in Fig. 29 are designated by like step numbers and need not be described again.

When request data is transmitted to the scrapbook server in order to access the blog (step 261), blog data for displaying the blog is transmitted from the scrapbook server 5 to the user computer (step 263).

In response, the blog window 270 shown in Fig. 31 is displayed on the display screen of the user computer (step 262). Processing executed in accordance with clicking of the scrapbook edit image is then executed and is similar to that described above.

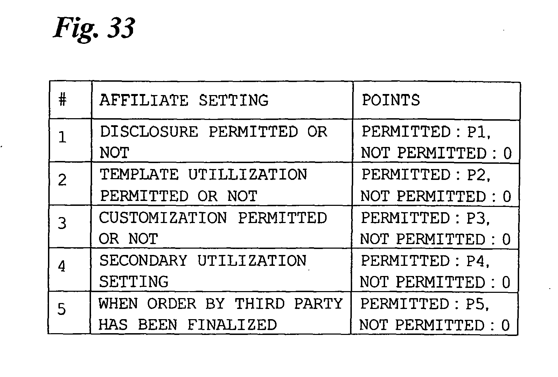

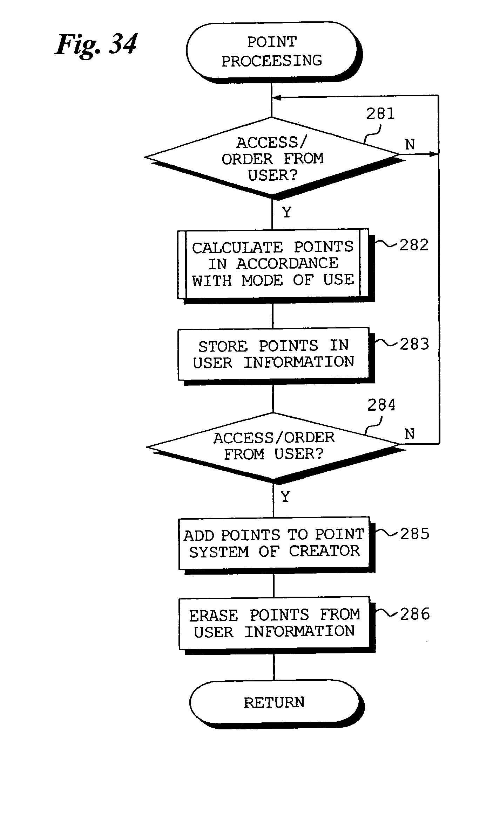

Figs. 33 and 34 concern processing for providing a creator with points that differ depending upon the mode in which the user has utilized a scrapbook edit image created by the creator 2.

Fig. 33 illustrates the corresponding relationship between set affiliate content and points conforming to the set content.

As described above, an affiliate setting includes whether or not disclosure is permitted, whether or not template utilization is permitted, whether or not customization is permitted, and whether or not secondary utilization is permitted. Points are decided in accordance with whether permission is granted or not. In addition to these, however, in a case where a user order has been finalized, points are also given to the creator of the scrapbook edit image created in connection with finalization of the order.

In a case where use has been made of a scrapbook edit image for which permission to disclose has been set, point P1 is given to the creator. In a case where use has been made of a scrapbook edit image for which permission to utilize a template has been set, point P2 is given to the creator. In a case where use has been made of a scrapbook edit image for which permission to customize has been set, point P3 is given to the creator. In a case where use has been made of a scrapbook edit image for which permission for secondary utilization has been set, point P4 is given to the creator. In a case where a user order has been finalized, point P5 is given to the creator. In a case where none of these has been set, no points are given to the creator. The size relationship among points P1 to P4 is set and changed freely by the scrapbook server 5.

Fig. 34 is a flowchart illustrating point processing.

As described above, it is determined whether a scrapbook edit image created by the creator 2 has been accessed or whether a scrapbook has been ordered utilizing this scrapbook edit image (step 281). In case of access or an order ("YES" at step 282), utilization-mode data is transmitted from the creator 2 to the scrapbook server 5, as described earlier, and a point is calculated in accordance with the mode of utilization, as illustrated in Fig. 33 (step 283). The calculated point is stored in the user information of the creator of the scrapbook edit image that has been utilized (step 283). If a point-back day arrives ("YES" at step 284), a point is added to the point system of the creator (step 285). By adding the point to the point system of the creator, the point is erased from the user information of the creator (step 286). Thus the point conforming to the mode of utilization is given to the creator of the scrapbook edit image utilized.

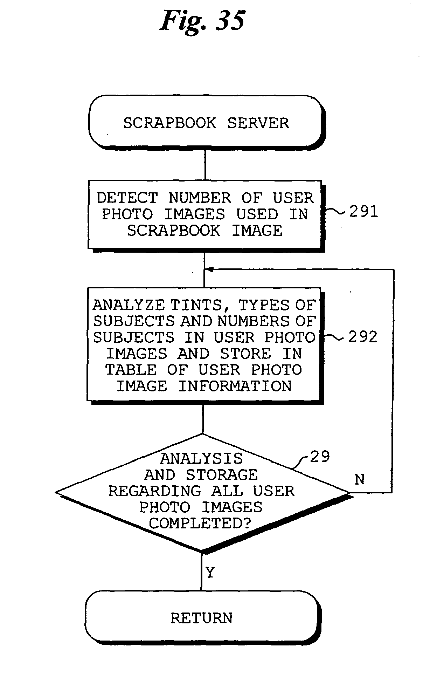

Figs. 35 to 41 illustrate another embodiment. Here a user utilizes a scrapbook image that has been created by a creator. In this case, it goes without saying that secondary utilization of the scrapbook image created by the creator has been permitted in the manner described above.

There are instances where a scrapbook image created by a creator includes a user photo image of the creator. A scrapbook image can be created by combining a user photo image of a user who utilizes a scrapbook image, instead of the user photo image of the creator, contained in the scrapbook image created by the creator. In a case where the creator creates a scrapbook image, it is considered that a part image such as a mount, material or decoration to be utilized in the scrapbook image will have been selected in conformity with the features of the user photo image contained in the scrapbook image. In this embodiment, the features of a user photo image contained in a scrapbook image created by a creator is stored together with identification data that identifies the scrapbook image. In a case where a user utilizes the scrapbook image created by the creator, a user image of the user whose features resemble the features of the user photo image of the creator contained in this scrapbook image is found and a scrapbook image is generated using the user image of the user that has been found.

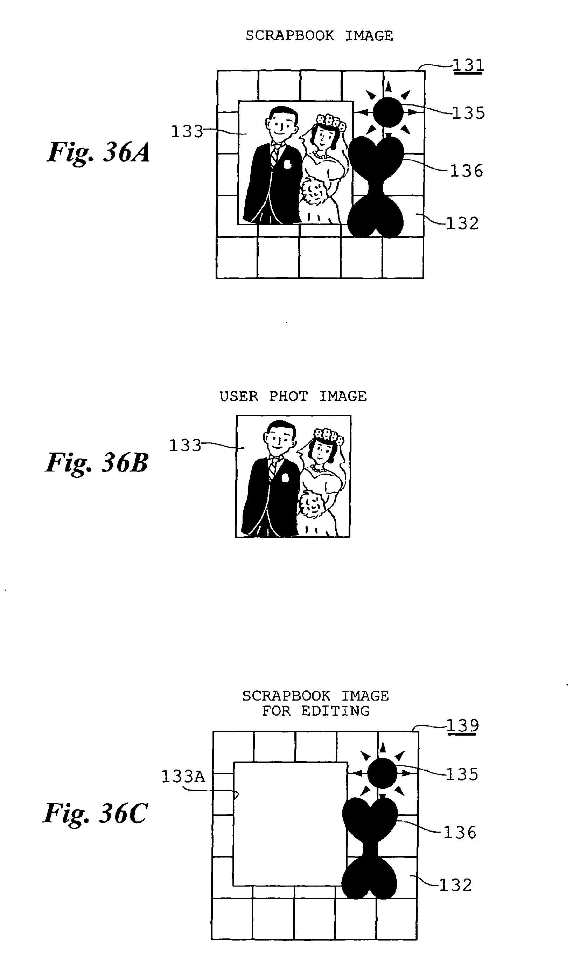

Fig. 35 is a flowchart illustrating processing for storing the features of the user image of a creator utilized in a scrapbook image created by the creator. Fig. 36A illustrates an example of a scrapbook image that has been created by a creator, Fig. 36B illustrates an example of a user photo image of the creator, and Fig. 36C illustrates an example of a scrapbook image for editing obtained by removing the user photo image of the creator from the scrapbook image. Portions in Figs. 36A to 36C identical with those described above are designated by like reference characters.

As illustrated in Fig. 36B, the user photo image 133 is removed from the scrapbook image 131 created by the creator as shown in Fig. 36A, and a scrapbook image 139 for editing from which the user photo image has been removed is generated, as shown in Fig. 36C. The scrapbook image 139 for editing includes a user-photo overlay area 133A on which the user image of the user is to be overlaid.

First, the number of user photo images of creators used in scrapbook images is detected (step 291). Next, the tints, the types of subjects and the numbers of subjects of user photo images used in scrapbook images are analyzed and stored in a table of user photo image information (step 292). The tint of a user photo image indicates the tendency of the color of the image of the overall user photo, such as whether the user photo image is blackish, reddish, bluish or yellowish. Tint is calculated based upon the percentage of the color used in the user photo image. The type of subject indicates whether the subject contained in the user photo image is a person, an animal or scenery, etc. By subjecting a user photo image to processing for detecting the image of a person or the image of an animal, whether the user photo image contains the image of a person or the image of an animal can be determined. In a case where neither the image of a person nor the image of an animal is included, it can be determined that the image is that of scenery. In a case where a user photo image contains the image of a person or the image of an animal, the number of subjects indicates the number of persons or number of animals.

The processing for analyzing user photo images and the processing for storing the analytical results in the table of user photo image information is repeated with regard to all user photo images used in the scrapbook images (step 293).

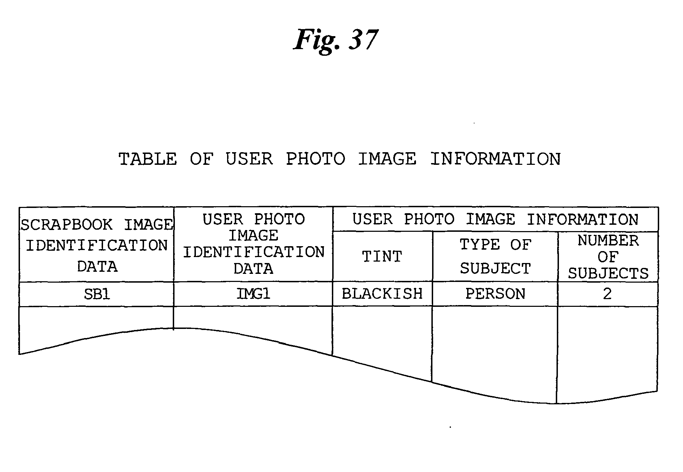

Fig. 37 illustrates an example of a table of user photo image information.

The table of user photo image information contains user photo image information in correspondence with identification data that identifies scrapbook images in which user photo images are being used. (Since a scrapbook image is specified by scrapbook data consisting of a set of layer data, as mentioned above, identification data for identifying scrapbook image data is the data that specifies the scrapbook data). The user photo image information includes tint, type of subject and number of subjects, as mentioned above. The table of user photo image information further contains identification data for identifying user photo images in correspondence with the scrapbook-image identification data.

In a case where a plurality of user photo images are being used in a scrapbook image, identification data for identifying the user photo image and user photo image information are stored in the table of user photo image information for every user photo image. In a case where a plurality of user photo images are being used in a scrapbook image, the relative positions of the user photo images in the scrapbook image would also be stored in the table of user photo information.

The user photo image informations of all scrapbook images obtained in the scrapbook server are stored in the user photo image information table.

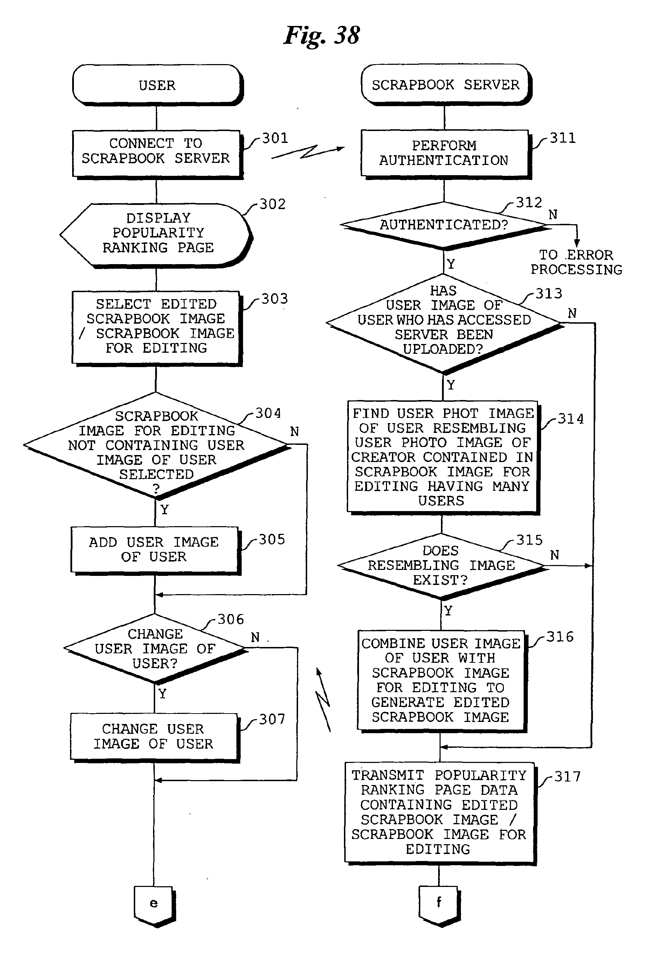

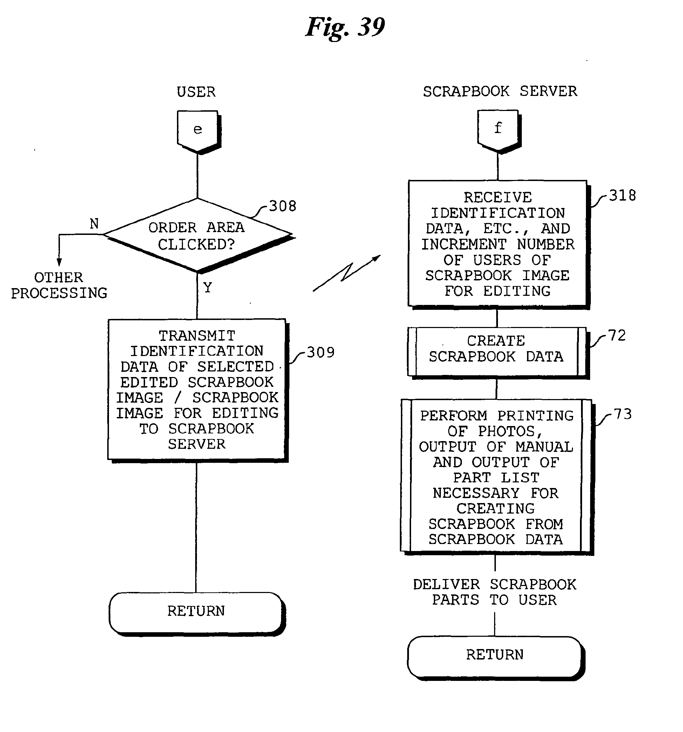

Figs. 38 and 39 are flowcharts illustrating processing in which a user utilizes a scrapbook image for editing obtained from a scrapbook image created by the creator.

The user client computer is connected to the scrapbook server (step 301 in Fig. 38) and is authenticated by the scrapbook server (step 311 in Fig. 38). If the client computer is authenticated by the scrapbook server ("YES" at step 312 in Fig. 38), it is determined whether the user image of the user of the client computer connected to the scrapbook server has been uploaded to the scrapbook server (step 313 in Fig. 38).

If the user image of the user has been uploaded to the scrapbook server ("YES" at step 313 in Fig. 38), then a user photo image of the user that resembles the user photo image of the creator contained in a scrapbook image for editing having many users is found (step 314 in Fig. 38). If a user photo image of the user resembling the user photo image of the creator exists ("YES" at step 315 in Fig. 38), then the user image of the user is combined with the scrapbook image for editing to generate a scrapbook image whose editing has been completed (step 316 in Fig. 38).

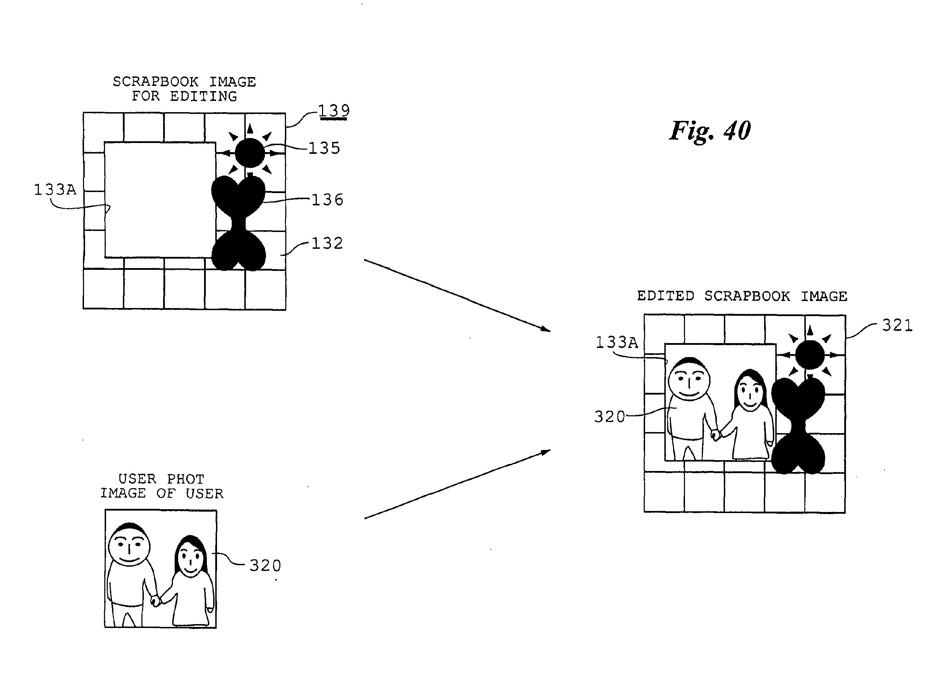

Fig. 40 illustrates the manner in which such an edited scrapbook image is generated.

Assume that a scrapbook image for editing having many users is scrapbook image 139 for editing, as mentioned above. Assume that a user photo image 320 of the user resembling the user photo image (see Fig. 36B) of the creator that was being used in the user-photo overlay area 133A formed in the scrapbook image 139 for editing has been found.

The user photo image 320 of the user is combined with the user-photo overlay area 133A of the scrapbook image 139 for editing having many users, thereby generating an edited scrapbook image 321.

With reference again to Fig. 38, data representing a popularity ranking page containing edited scrapbook images and scrapbook images for editing, etc., is transmitted from the scrapbook server to the client computer of the user (step 316 in Fig. 38).

When the data representing the popularity ranking page transmitted from the scrapbook server is received by the user client computer, the popularity ranking page is displayed on the display screen of the user client computer (step 302 in Fig. 38).

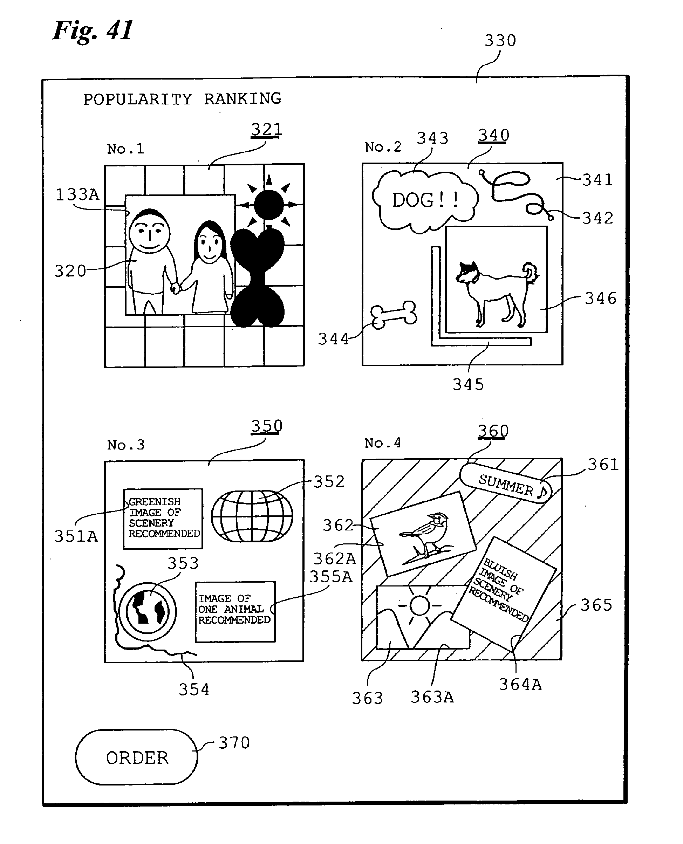

Fig. 41 illustrates an example of a popularity ranking page 330 displayed on the display screen of the display unit of the user client computer.

Displayed on the popularity ranking page 330 are edited scrapbook images or scrapbook image for editing in which use was made of scrapbook images for editing having a high rate of utilization. In Fig. 41, the four top-ranked edited scrapbook images or scrapbook images for editing are being displayed. However, it may be so arranged that three or less or five or more of such images are displayed.

An edited scrapbook image 321, which has the highest popularity ranking, is the result of combining the user photo image 320 of the user with the user-photo overlay area 133A. An edited scrapbook image 340, which has the second highest popularity ranking, also is the result of combining a user photo image 346 of the user with a user-photo overlay area 346A. Part images 341 to 345 of materials, etc., also are included in the edited scrapbook image 340. The user photo images 320 and 346 of the users that have been combined with the edited scrapbook images 321 and 340 resemble the user photo images of the creators contained in the scrapbook images corresponding to the edited scrapbook images 321 and 340.

An edited scrapbook image 350 having the third highest popularity ranking has user-photo overlay areas 351A and 355A that are blank; a user photo image of a user has not been combined with these areas. This means that user photo images of the user resembling the user photo images of the creator that used to be combined with the user-photo overlay areas 351A and 355A were not found. Part images 352 to 354 of materials, etc., also are being displayed in the edited scrapbook image 350. The features of user photo images of the creator that used to be combined with the user-photo overlay areas 351A and 355A are displayed in the blank user-photo overlay areas 351A and 355A. By observing these features of the user photo images of the creator, the user can determine what user photo images having which features should be combined with the user-photo overlay areas 351A and 355A.

An edited scrapbook image 360 having the fourth highest popularity ranking has user photo images 362 and 363 of the user combined with user-photo overlay areas 362A and 363A, respectively, but does not have a user photo image of the user combined with a user-photo overlay area 364A. This means that a user photo image of the user resembling the user photo image of the creator that used to be combined with the user-photo overlay area 364 was not found. Material images 361, 365, etc., are being displayed in the edited scrapbook image 360 as well.

An order area 370 is displayed at the lower left of the popularity ranking page 330.

With reference again to Fig. 38, an edited scrapbook image or scrapbook image for editing contained on the popularity ranking page 330 is selected by the user (step 303 in Fig. 39). The edited scrapbook images and scrapbook images for editing are assumed to be clickable, and an image clicked by the user would be selected.

If a scrapbook image for editing with which a user photo image of the user has not been combined is selected ("YES" at step 304 in Fig. 38), then the user image of the user is added to the user-photo overlay area with which the user photo image has not been combined (step 305 in Fig. 38). Further, in a case where the user photo image of the user contained in the selected edited scrapbook image or scrapbook image for editing to which the user photo image has been added is to be changed ("YES" at step 306 in Fig. 38), the user photo image to be changed is moved as by being dragged, the image is removed from the edited scrapbook image or scrapbook image for editing to which the user photo image has been added and a new user image is overlaid.

If the order area 370 is clicked by the user ("YES" at step 308 in Fig. 39), identification data (e.g., a file name) identifying the selected edited scrapbook image or scrapbook image for editing is transmitted from the user client computer to the scrapbook server (step 309 in Fig. 39).

When the identification data transmitted from the user client computer is received by the scrapbook server (step 318 in Fig. 39), the number of users of the scrapbook image for editing known from the identification data is incremented. The larger the number of users of the scrapbook image for editing, the higher the popularity ranking, as mentioned above. The scrapbook images for editing having many large numbers of users are displayed on the popularity ranking page.

Scrapbook data corresponding to the edited scrapbook image or scrapbook image for editing specified by the identification data received by the scrapbook server is created (step 72 in Fig. 39). A procedural manual is then created as mentioned above (step 73 in Fig. 39), and the parts of the scrapbook are delivered to the user.

In the foregoing embodiments, a user photo image of the creator of a scrapbook image is analyzed, user photo image information such as tint, type of subject and number of subjects obtained by such analysis is stored in the table of user photo image information, a user photo image of the user resembling the user photo image of the creator is found using the user photo image information obtained by analysis, and an edited scrapbook image is generated. However, in a case where a feature of at least one of the user photo images of the creator and user has been appended as auxiliary information of the user photo image, a user photo image of the user resembling the user photo image of the creator of the scrapbook image can be found utilizing this auxiliary information even if the user photo information of the creator or user is not analyzed. In a case where the auxiliary information has been recorded in the header of a photographic image file representing a photographic image, the auxiliary information can be read from the header. By storing the auxiliary information that has been read from the header in the above-described table of user photo image information (Fig. 37: auxiliary information table), the user photo image information can be read from the table of user photo image information and a user photo image of the user resembling the user photo image of the creator of the scrapbook image can be found. Not only user photo image information regarding a user photo image of a creator but also user photo image information regarding the user photo image of a user also may be stored in the table of user photo image information.

As many apparently widely different embodiments of the present invention can be made without departing from the spirit and scope thereof, it is to be understood that the invention is not limited to the specific embodiments thereof except as defined in the appended claims.

## Claims

1. A scrapbook server comprising:
a scrapbook image data transmitting device for transmitting scrapbook image data representing scrapbook images to a client computer in order to display scrapbook images, which are images of a scrapbook that has been created by affixing a part such as a photograph to a part such as a paper mount, on a display screen of a display unit of the client computer;
a select-command receiving device for receiving a select command transmitted from the client computer in response to selection of desired scrapbook images from among the scrapbook images displayed on the display screen of the display unit of the client computer owing to transmission of the scrapbook image data from said scrapbook image data transmitting device to the client computer;
a for-edit scrapbook image data transmitting device, which is responsive to receipt of the select command by said select-command receiving device, for transmitting for-edit scrapbook image data representing a for-edit scrapbook image to the client computer in order to display a for-edit scrapbook image on the display screen of the display unit of the client computer, the for-edit scrapbook image excluding photographic images used in scrapbook images among the selected scrapbook images;
an order data receiving device for receiving order data that includes data identifying a part necessary for scrapbook creation, the order data being transmitted from the client computer owing to execution by the client computer of a scrapbook creating simulation, such as placement of a photographic image, placement of a part image and selection of a part used in a scrapbook, utilizing the for-edit scrapbook image displayed on the display screen of the display unit of the client computer owing to transmission of the for-edit scrapbook image data from said for-edit scrapbook image data transmitting device to the client computer; and
a printer control device for controlling a printer, based upon the order data received by said order data receiving device, so as to print a procedural manual in which a procedure for creating the scrapbook is described.

2. The scrapbook server according to claim 1, wherein said printer control device prints a procedural manual in conformity with a case where only viewing of a for-edit scrapbook image is permitted and the image is to be viewed; a case where a simulation is performed in which a photographic image is excluded from a for-edit scrapbook image and another photographic image is disposed in place of the excluded photographic image; a case where a simulation is performed in which a part image contained in a for-edit scrapbook image is changed or the position at which a part image is placed is changed; a case where a part image created by the creator of the for-edit scrapbook image is extracted from among part images contained in the for-edit scrapbook image and a simulation for creating a scrapbook is performed anew using the extracted part image; and, if a part image created by the creator of the for-edit scrapbook image is extracted from among part images contained in the for-edit scrapbook image and a simulation for creating a scrapbook is performed anew using the extracted part image, a case where order data for scrapbook creation is transmitted from the client computer utilizing the for-edit scrapbook image when secondary utilization of the extracted for-edit image has been permitted and when it has not been permitted.

3. A scrapbook server comprising:
a for-edit scrapbook image data extracting device for extracting a plurality of items of for-edit scrapbook image data, which represent a plurality of for-edit scrapbook images having a high rate of utilization, from among a number of items of scrapbook image data representing a number of for-edit scrapbook images excluding a photographic image used in a scrapbook image, which is an image of a scrapbook created by affixing a part such as a photograph to a part such as a paper mount;
a for-edit scrapbook image data transmitting device for transmitting the plurality of items of for-edit scrapbook image data extracted by said for-edit scrapbook image data extracting device to a client computer of a user of the for-edit scrapbook images in order to display the plurality of for-edit scrapbook images on a display screen of a display unit of the client computer of the user;
a first identification data receiving device for receiving identification data transmitted from the client computer of the user owing to transmission of the plurality of items of for-edit scrapbook image data from said for-edit scrapbook image data transmitting device to the client computer of the user, the identification data specifying a for-edit scrapbook image selected from among the plurality of for-edit scrapbook images displayed on the display screen of the display unit of the client computer of the user; and
a printer control device for controlling a printer so as to print a procedural manual in which is described a procedure for creating a scrapbook corresponding to a for-edit scrapbook image specified by the identification data received by said first identification data receiving device.

4. The scrapbook server according to claim 3, further comprising:
a combining device for combining a photographic image of the user with each of the plurality of for-edit scrapbook images represented by the plurality of items of for-edit scrapbook image data extracted by said for-edit scrapbook image data extracting device;
an edited scrapbook image data transmitting device for transmitting a plurality of items of scrapbook image data, which represent a plurality of edited scrapbook images obtained by combining the photographic image of the user with each of the for-edit scrapbook images by said combining device, to the client computer of the user in order to display a plurality of edited scrapbook images on the display screen of the display unit of the client computer of the user; and
a second identification data receiving device for receiving identification data specifying an edited scrapbook image selected from the plurality of edited scrapbook images displayed on the display screen of the display unit of the client computer of the user owing to transmission of the plurality of items of scrapbook image data from said edited scrapbook image data transmitting device to the client computer of the user;
wherein said printer control device controls the printer so as to print a procedural manual in which is described a procedure for creating a scrapbook corresponding to the edited scrapbook image specified by the identification data received by said second identification data receiving device.

5. The scrapbook server according to claim 4, further comprising a photographic image detecting device for executing processing for finding a photographic image resembling a photographic image of the creator of a scrapbook image contained in a scrapbook image corresponding to each for-edit scrapbook image of the plurality of for-edit scrapbook images extracted by said for-edit scrapbook image data extracting device from photographic images of users stored in advance, said processing being executed for a plurality of for-edit scrapbook images;
wherein said combining device combines a corresponding photographic image, from among a plurality of photographic images detected by said photographic image detecting device, with each for-edit scrapbook image scrapbook image of the plurality of scrapbook images represented by the plurality of items of for-edit scrapbook image data extracted by said for-edit scrapbook image data extracting device would be repeated for each of the plurality of for-edit scrapbook images.

6. A method of controlling a scrapbook server comprising the steps of:
transmitting, by a scrapbook image data transmitting device, scrapbook image data representing scrapbook images to a client computer in order to display scrapbook images, which are images of a scrapbook that has been created by affixing a part such as a photograph to a part such as a paper mount, on a display screen of a display unit of the client computer;
receiving, by a select-command receiving device, a select command transmitted from the client computer in response to selection of desired scrapbook images from among the scrapbook images displayed on the display screen of the display unit of the client computer owing to transmission of the scrapbook image data from the scrapbook image data transmitting device to the client computer;
in response to receipt of the select command by the select-command receiving device, transmitting, by a for-edit scrapbook image data transmitting device, for-edit scrapbook image data representing a for-edit scrapbook image to the client computer in order to display a for-edit scrapbook image on the display screen of the display unit of the client computer, the for-edit scrapbook image excluding photographic images used in scrapbook images among the selected scrapbook images;
receiving, by an order data receiving device, order data that includes data identifying a part necessary for scrapbook creation, the order data being transmitted from the client computer owing to execution by the client computer of scrapbook creating simulation, such as placement of a photographic image, placement of a part image and selection of a part used in a scrapbook, utilizing the for-edit scrapbook image displayed on the display screen of the display unit of the client computer owing to transmission of the for-edit scrapbook image data from the for-edit scrapbook image data transmitting device to the client computer; and
controlling a printer by a printer control device, based upon the order data received by the order data receiving device, so as to print a procedural manual in which a procedure for creating the scrapbook is described.

7. A method of controlling a scrapbook server comprising the steps of:
extracting, by a for-edit scrapbook image data extracting device, a plurality of items of for-edit scrapbook image data, which represent a plurality of for-edit scrapbook images having a high rate of utilization, from among a number of items of scrapbook image data representing a number of for-edit scrapbook images excluding a photographic image used in a scrapbook image, which is an image of a scrapbook created by affixing a part such as a photograph to a part such as a paper mount;
transmitting, by a for-edit scrapbook image data transmitting device, the plurality of items of for-edit scrapbook image data extracted by the for-edit scrapbook image data extracting device to a client computer of a user of the for-edit scrapbook images in order to display the plurality of for-edit scrapbook images on a display screen of a display unit of the client computer of the user;
receiving, by a first identification data receiving device, identification data transmitted from the client computer of the user owing to transmission of the plurality of items of for-edit scrapbook image data from the for-edit scrapbook image data transmitting device to the client computer of the user, the identification data specifying a for-edit scrapbook image selected from among the plurality of for-edit scrapbook images displayed on the display screen of the display unit of the client computer of the user; and
controlling, by a printer control device, a printer so as to print a procedural manual in which is described a procedure for creating a scrapbook corresponding to a for-edit scrapbook image specified by the identification data received by the first identification data receiving device.

8. A program for controlling a scrapbook server so as to:
transmit scrapbook image data representing scrapbook images to a client computer in order to display scrapbook images, which are images of a scrapbook that has been created by affixing a part such as a photograph to a part such as a paper mount, on a display screen of a display unit of the client computer;
receive a select command transmitted from the client computer in response to selection of desired scrapbook images from among the scrapbook images displayed on the display screen of the display unit of the client computer owing to transmission of the scrapbook image data to the client computer;
in response to receipt of the select command, transmit for-edit scrapbook image data representing a for-edit scrapbook image to the client computer in order to display a for-edit scrapbook image on the display screen of the display unit of the client computer, the for-edit scrapbook image excluding photographic images used in scrapbook images among the selected scrapbook images;
receive order data that includes data identifying a part necessary for scrapbook creation, the order data being transmitted from the client computer owing to execution by the client computer of a scrapbook creating simulation, such as placement of a photographic image, placement of a part image and selection of a part used in a scrapbook, utilizing the for-edit scrapbook image displayed on the display screen of the display unit of the client computer owing to transmission of the for-edit scrapbook image data to the client computer; and
control a printer, based upon the order data received, so as to print a procedural manual in which a procedure for creating the scrapbook is described.

9. A program for controlling a scrapbook server so as to:
extract a plurality of items of for-edit scrapbook image data, which represent a plurality of for-edit scrapbook images having a high rate of utilization, from among a number of items of scrapbook image data representing a number of for-edit scrapbook images excluding a photographic image used in a scrapbook image, which is an image of a scrapbook created by affixing a part such as a photograph to a part such as a paper mount;
transmit the extracted plurality of items of for-edit scrapbook image data to a client computer of a user of the for-edit scrapbook images in order to display the plurality of for-edit scrapbook images on a display screen of a display unit of the client computer of the user;
receive identification data transmitted from the client computer of the user owing to transmission of the plurality of items of for-edit scrapbook image data to the client computer of the user, the identification data specifying a for-edit scrapbook image selected from among the plurality of for-edit scrapbook images displayed on the display screen of the display unit of the client computer of the user; and
control a printer so as to print a procedural manual in which is described a procedure for creating a scrapbook corresponding to a for-edit scrapbook image specified by the identification data received.

10. A recording medium on which the program set forth in claim 8 has been stored.

11. A recording medium on which the program set forth in claim 9 has been stored.

12. A scrapbook server comprising:
a scrapbook image data transmitting device for transmitting scrapbook image data representing a scrapbook image to a client computer in order to display a scrapbook image, which is obtained by sensing the image of a scrapbook that has been created by affixing a part such as a photograph to a part such as a paper mount, on a display screen of a display unit of the client computer;
a select-command receiving device for receiving a select command transmitted from the client computer in response to selection of a scrapbook image displayed on the display screen of the display unit of the client computer owing to transmission of the scrapbook image data from said scrapbook image data transmitting device to the client computer;
a for-edit scrapbook image data transmitting device, which is responsive to receipt of the select command by said select-command receiving device, for transmitting for-edit scrapbook image data representing a for-edit scrapbook image to the client computer in order to a display a for-edit scrapbook image on the display screen of the display unit of the client computer, the for-edit scrapbook image excluding a photographic image used in a scrapbook image in the selected scrapbook image;
a utilization-mode-data receiving device for receiving data, which represents mode of utilization of the for-edit scrapbook image, transmitted from the client computer owing to execution by the client computer of a scrapbook creating simulation, such as placement of a photographic image and part image and selection of a part used in a scrapbook, utilizing the for-edit scrapbook image displayed on the display screen of the display unit of the client computer owing to transmission of the for-edit scrapbook image data from said for-edit scrapbook image data transmitting device to the client computer; and
a usage fee deciding device for deciding a usage fee to the creator of the for-edit scrapbook image based upon the mode of utilization represented by the utilization-mode data received by said utilization-mode-data receiving device.

13. The scrapbook server according to claim 12,
wherein said usage fee deciding device decides a usage fee to the creator of the scrapbook in such a manner that the usage fee will differ in a case where only viewing of a for-edit scrapbook image is permitted and the image is to be viewed; a case where a simulation is performed in which a photographic image is excluded from a for-edit scrapbook image and another photographic image is disposed in place of the excluded photographic image; a case where a simulation is performed in which a part image contained in a for-edit scrapbook image is changed or the position at which a part image is placed is changed; a case where a part image created by the creator of the for-edit scrapbook image is extracted from among part images contained in the for-edit scrapbook image and a simulation for creating a scrapbook is performed anew using the extracted part image; and, if a part image created by the creator of the for-edit scrapbook image is extracted from among part images contained in the for-edit scrapbook image and a simulation for creating a scrapbook is performed anew using the extracted part image, a case where order data for scrapbook creation is transmitted from the client computer utilizing the for-edit scrapbook image when secondary utilization of the extracted for-edit image has been permitted and when it has not been permitted.

14. The scrapbook server according to claim 12,
wherein a mode of utilization that has been permitted and a mode of utilization that has not been permitted are set from among a plurality of modes of utilization of a for-edit scrapbook image, said utilization-mode-data receiving device accepting utilization-mode data transmitted from the client computer based upon a simulation for creating a scrapbook in a utilization mode that has been permitted.

15. A method of controlling a scrapbook server comprising the steps of:
transmitting, by a scrapbook image data transmitting device, scrapbook image data representing a scrapbook image to a client computer in order to display a scrapbook image, which is obtained by sensing the image of a scrapbook that has been created by affixing a part such as a photograph to a part such as a paper mount, on a display screen of a display unit of the client computer;
receiving, by a select-command receiving device, a select command transmitted from the client computer in response to selection of a scrapbook image displayed on the display screen of the display unit of the client computer owing to transmission of the scrapbook image data from the scrapbook image data transmitting device to the client computer;
transmitting, by a for-edit scrapbook image data transmitting device in response to receipt of the select command by the select-command receiving device, for-edit scrapbook image data representing a for-edit scrapbook image to the client computer in order to a display a for-edit scrapbook image on the display screen of the display unit of the client computer, the for-edit scrapbook image excluding a photographic image used in a scrapbook image in the selected scrapbook image;
receiving, by a utilization-mode-data receiving device, data, which represents mode of utilization of the for-edit scrapbook image, transmitted from the client computer owing to execution by the client computer of a scrapbook creating simulation, such as placement of a photographic image and part image and selection of a part used in a scrapbook, utilizing the for-edit scrapbook image displayed on the display screen of the display unit of the client computer owing to transmission of the for-edit scrapbook image data from the for-edit scrapbook image data transmitting device to the client computer; and
deciding, by a usage fee deciding device, a usage fee to the creator of the for-edit scrapbook image based upon the mode of utilization of the for-edit scrapbook image represented by the utilization-mode data received.

16. A program for controlling a scrapbook server so as to:
transmit scrapbook image data representing a scrapbook image to a client computer in order to display a scrapbook image, which is obtained by sensing the image of a scrapbook that has been created by affixing a part such as a photograph to a part such as a paper mount, on a display screen of a display unit of the client computer;
receive a select command transmitted from the client computer in response to selection of a scrapbook image displayed on the display screen of the display unit of the client computer owing to transmission of the scrapbook image data to the client computer;
in response to receipt of the select command, transmit for-edit scrapbook image data representing a for-edit scrapbook image to the client computer in order to a display a for-edit scrapbook image on the display screen of the display unit of the client computer, the for-edit scrapbook image excluding a photographic image used in a scrapbook image in the selected scrapbook image;
receive data, which represents mode of utilization of the for-edit scrapbook image, transmitted from the client computer owing to execution by the client computer of a scrapbook creating simulation, such as placement of a photographic image and part image and selection of a part used in a scrapbook, utilizing the for-edit scrapbook image displayed on the display screen of the display unit of the client computer owing to transmission of the for-edit scrapbook image data to the client computer; and
decide a usage fee to the creator of the for-edit scrapbook image based upon the mode of utilization of the for-edit scrapbook image represented by the utilization-mode data received.

17. A recording medium on which the program set forth in claim 16 has been stored.
